# EUROPEAN PATENT APPLICATION

(11) **EP 2 194 104 A1**
(43) Date of publication of application: **09.06.2010**
(21) Application number: 08833265.5
(22) Date of filing: 25.09.2008
(51) Int. Cl.: C09D 201/02, C03C 17/30, C09D 7/12, C09D 143/04, C09D 185/00, C09D 201/10

(54) **COMPOSITION FOR FORMATION OF HYDROPHILIC FILM, AND HYDROPHILIC MEMBER**

(30) Priority: 26.09.2007 JP 2007250087; 25.03.2008 JP 2008079323; 31.07.2008 JP 2008198959
(71) Applicant: Fujifilm Corporation, Tokyo 106-0031 (JP)
(72) Inventor: YAMASAKI, Sumiaki, Minami-Ashigara-shi Kanagawa (JP); TANAKA, Satoshi, Minami-Ashigara-shi Kanagawa (JP); NAKATA, Hiyoku, Minami-Ashigara-shi Kanagawa (JP); MURAYAMA, Yuichiro, Odawara-shi Kanagawa (JP); KONDO, Yoshiaki, Odawara-shi Kanagawa (JP)
(74) Representative: HOFFMANN EITLE
(86) International application number: PCT/JP2008/067311
(87) International publication number: WO 2009/041511

(57) **Abstract**

A hydrophilic film forming composition which is used for forming on the surface of a support of every sort a hydrophilic film provided with anti-fogging properties, abrasion resistance and antibacterial properties and having more favorable antifouling properties is provided. A hydrophilic member having an excellent anti-fogging, abrasion-resistant, antibacterial and antifouling surface provided with a hydrophilic film formed of the instant hydrophilic film forming composition on the surface of an appropriate support is provided.

A hydrophilic film forming composition including (A) a positively charged nitrogen atom-containing compound having a Log P of not more than 2; (B) a hydrolyzable silyl group-containing hydrophilic polymer; and (C) a metal complex catalyst. A hydrophilic member including a support having the instant hydrophilic film forming composition coated thereon.

## Description

### TECHNICAL FIELD

The present invention relates to a hydrophilic film forming composition which is useful for forming on the surface of a substrate of every sort a hydrophilic film having excellent anti-fogging properties, abrasion resistance and antibacterial properties and having more favorable antifouling properties and to a hydrophilic member having an anti-fogging, antibacterial and antifouling surface provided with a hydrophilic film made of the instant hydrophilic film forming composition.

### BACKGROUND ART

There have been proposed various technologies for preventing adhesion of oil stains on the member surface. In particular, in optical members such as antireflection films, optical filters, optical lenses, spectacle lenses, mirrors and the like, when used by a human being, a stain by fingerprints, sebum, sweat, cosmetics, etc. adheres, thereby lowering its functions, and the stain removal is complicated. Therefore, it is desirable that an effective antifouling treatment is applied.
Also, in recent years, following the diffusion of mobiles, it has become frequent to use a display outdoors. However, when used in an environment where external light is made incident, this external light is regularly reflected on the display surface, resulting in causing such a problem that the reflected light is mixed with display light, thereby making it difficult to see a display image, or the like. For that reason, an antireflection optical member is frequently disposed on the display surface.
As such an antireflection optical member, for example, there are known ones in which a high-refractive index layer and a low-refractive index layer made of a metal oxide or the like are stacked on the surface of a transparent substrate; ones in which a low-refractive index layer made of an inorganic or organic fluorinated compound or the like is formed as a single layer on the surface of a transparent substrate; ones in which a coating layer containing a transparent fine particle is formed on the surface of a transparent plastic film substrate, thereby reflecting diffusely external light by the irregular surface; and the like. Similar to the foregoing optical members, when used by a human being, a stain by fingerprints, sebum, etc. is easy to adhere to the surface of such an antireflection optical member. Thus, in addition to a problem that only a portion where the stain adheres becomes highly reflective, there was involved a problem that in general, the surface of an antireflection film has fine irregularities so that the stain removal is difficult.

There have been proposed various technologies for forming on the surface an antifouling function with a performance of making a stain hardly adhere to the surface of a solid member, making it easy to remove an adhered stain, or the like. In particular, as a combination of an antireflection member and an antifouling member, for example, there have been proposed an antifouling and abrasion-resistant material having an antireflection film composed mainly of silicon dioxide, which is treated with a compound containing an organosilicon substituent (see, for example, Patent Document 1); and an antifouling and abrasion-resistant CRT filter in which the surface of a substrate is coated with a silanol-terminated organic polysiloxane (see, for example, Patent Document 2). Also, there have been proposed an antireflection film containing a silane compound inclusive of a polyfluoroalkyl group-containing silane compound (see, for example, Patent Document 3); and a combination of an optical thin film composed mainly of silicon dioxide and a copolymer of a perfluoroalkyl acrylate and an alkoxysilane group-containing monomer (see, for example, Patent Document 4), respectively.
However, antifouling layers formed by the conventional methods are insufficient in antifouling properties; in particular, a stain by fingerprints, sebum, sweat, cosmetics, etc. is hardly wiped off; and in a surface treatment with a material having low surface energy, such as fluorine, silicon and the like, a lowering of the antifouling performance with time is a matter of concern. For that reason, the development of an antifouling member with excellent antifouling properties and durability is desired.

When resin films which are used for various purposes on the surface of an optical member or the like, or inorganic materials such as a glass, a metal and the like are concerned, those having a surface which is hydrophobic or exhibits weak hydrophilicity are general. When the surface of a substrate using a resin film, an inorganic material, etc. is hydrophilized, an adhered waterdrop is evenly spread on the substrate surface to form a uniform water film, and therefore, the fogginess from a glass, a lens or a mirror can be effectively prevented, thereby bringing usefulness for preventing devitrification due to hygroscopic moisture, securing visibility at the time of rainy weather or the like. Furthermore, city soot and dust, combustion products such as carbon black and the like contained in an exhaust gas of automobiles or the like, and hydrophobic pollutants such as fats and oils, sealant eluting components and the like hardly adhere thereto, and even if such a material adheres thereto, it can be easily washed off by rainfall or washing with water; and therefore, such is useful for a variety of applications.

A surface treatment method for hydrophilizing the surface which has hitherto been proposed, for example, an etching treatment, a plasma treatment or the like enables one to highly hydrophilize the surface; however, the effect is temporary, and the hydrophilic state cannot be kept for a long period of time. There has also been proposed a surface-hydrophilic coating film using a hydrophilic graft polymer as one of hydrophilic resins (see, for example, Non-Patent Document 1). Though this coating film has hydrophilicity to a certain degree, it cannot be said that the affinity with a substrate is sufficient, and higher durability is demanded.

Also, a film using titanium oxide as a film having excellent surface hydrophilicity has hitherto been known; for example, a technology in which a photocatalyst-containing layer is formed on the surface of a substrate, and the surface is highly hydrophilized depending upon photo-excitation of the photocatalyst is disclosed; and it is reported that when this technology is applied to various composite materials such as glasses, lenses, mirrors, exterior materials, members dealing with water and the like, excellent antifouling properties can be imparted to such a composite material (see, for example, Patent Document 5). However, in view of the fact that the hydrophilic film using titanium oxide does not have sufficient film strength and that a hydrophilizing effect cannot be revealed unless it is further photo-excited, there is involved a problem that the use site is restricted. Therefore, an antifouling member having durability and capable of being used in any site is demanded.

In order to achieve the foregoing problems, it has been found that a hydrophilic surface provided with a crosslinking structure by paying attention to characteristics of a sol-gel organic/inorganic hybrid film and subjecting a hydrophilic polymer and an alkoxide to hydrolysis and condensation polymerization exhibits excellent anti-fogging properties and antifouling properties and has favorable abrasion resistance (see Patent Document 6). A hydrophilic surface layer having such a crosslinking structure is easily obtained by combining a specified hydrophilic polymer having a reactive group in a terminal thereof with a crosslinking agent.

However, all of the foregoing are low in antifouling properties against a positively charged stain factor and insufficient in antibacterial properties, and therefore, there is yet room for improvement.
Patent Document 1: JP-A-64-86101
Patent Document 2: JP-A-4-338901
Patent Document 3: JP-B-6-29332
Patent Document 4: JP-A-7-16940
Patent Document 5: WO 96/29375
Patent Document 6: Japanese Patent Application No. 2007-254265
Non-Patent Document 1: Newspaper article of Kagaku Kogyo Nippo (The Chemical Daily) dated January 30, 1995

### DISCLOSURE OF THE INVENTION

### PROBLEMS THAT THE INVENTION IS TO SOLVE

An object of the invention is to solve the foregoing problems of the prior art technologies by further advancing the study of a sol-gel organic/inorganic hybrid film and to provide a hydrophilic film forming composition which is used for forming on the surface of a support of every sort a hydrophilic film provided with anti-fogging properties, abrasion resistance and antibacterial properties and having more favorable antifouling properties. Also, another object of the invention is to provide a hydrophilic member having an excellent anti-fogging, abrasion-resistant, antibacterial and antifouling surface provided with a hydrophilic film formed of the instant hydrophilic film forming composition on the surface of an appropriate support.

### MEANS FOR SOLVING THE PROBLEMS

As a result of advancing the study of a sol-gel organic/inorganic hybrid film, the present inventors have found that a hydrophilic surface layer obtained by newly adding a positively charged nitrogen atom-containing compound as a composition of a hydrophilic polymer and other material than an alkoxide has anti-fogging properties and abrasion resistance equal to those in the prior art technologies, reveals more excellent antifouling properties and further has high antibacterial properties, leading to accomplishment of the invention.
That is, the invention is as follows.

[1] A hydrophilic film forming composition, including:
   (A) a positively charged nitrogen atom-containing compound having a Log P of not more than 2;
   (B) a hydrolyzable silyl group-containing hydrophilic polymer; and
   (C) a metal complex catalyst.
[2] The hydrophilic film forming composition as set forth in [1],
   wherein the compound (A) has a Log P of not more than 0.
[3] The hydrophilic film forming composition as set forth in [1] or [2],
   wherein the compound (A) is a low-molecular compound having a molecular weight of not more than 1,000.
[4] The hydrophilic film forming composition as set forth in any one of [1] to [3],
   wherein the compound (A) is a low-molecular compound having a molecular weight of from 200 to 800.
[5] The hydrophilic film forming composition as set forth in any one of [1] to [4],
   wherein the compound (A) is selected among compounds represented by from 1 to 8 of the following general formula (1): 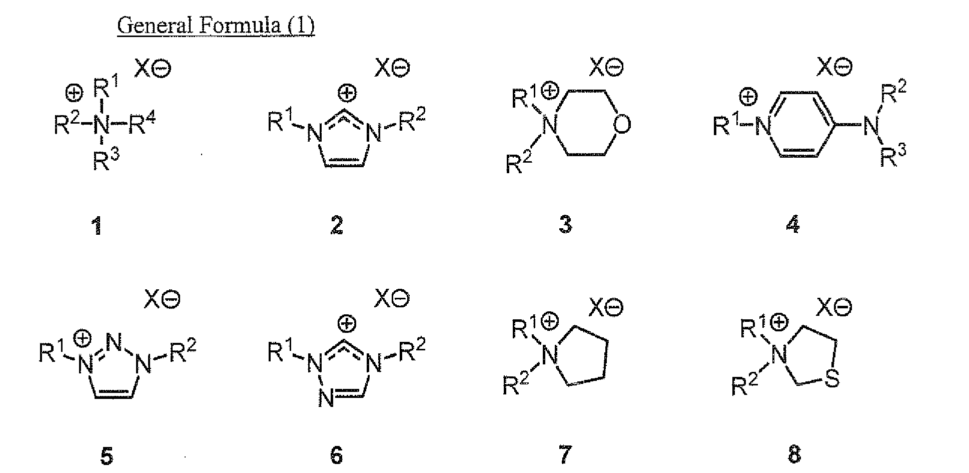 wherein each of R¹, R², R³ and R⁴ independently represents a hydrocarbon group which may be substituted with a hydroxyl group and/or a silane coupling group; and
   X represents an anion.
[6] The hydrophilic film forming composition as set forth in any one of [1] to [5],
   wherein the compound (A) is contained in an amount of from 1 to 30 % by mass relative to a nonvolatile component in the hydrophilic film forming composition.
[7] The hydrophilic film forming composition as set forth in any one of [1] to [6],
   wherein the hydrolyzable silyl group-containing hydrophilic polymer (B) has a hydrolyzable silyl group in a polymer terminal or side chain.
[8] The hydrophilic film forming composition as set forth in any one of [1] to [7],
   wherein the metal complex catalyst (C) is constituted of a metal element selected among the Groups 2A, 3B, 4A and 5A of the periodic table and an oxo or hydroxy compound selected among β-diketones, keto esters, hydroxycarboxylic acids or esters thereof, amino alcohols and enolic active hydrogen compounds.
[9] The hydrophilic film forming composition as set forth in any one of [1] to [8],
   wherein the hydrolyzable silyl group-containing hydrophilic polymer (B) includes a structure represented by the following general formula (2) or general formula (3): 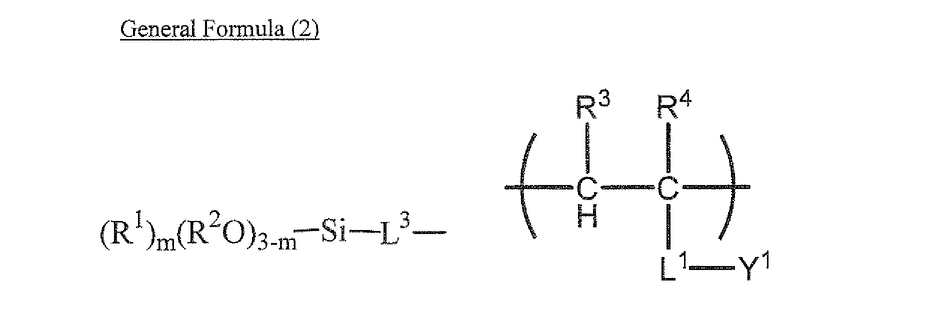 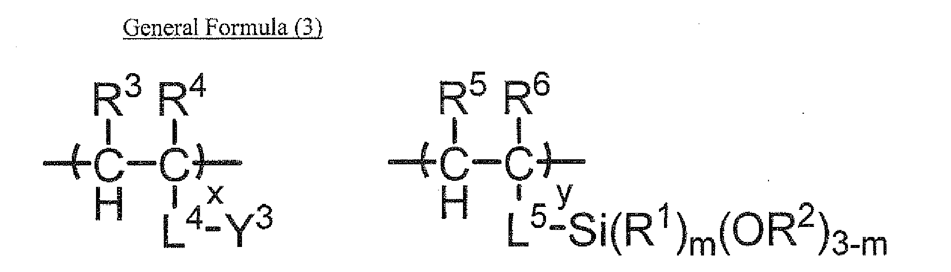 wherein each of R¹, R², R³ and R⁵ independently represents a hydrogen atom or a hydrocarbon group;
   each of R⁴ and R⁶ independently represents any one of a hydrogen atom, a hydrocarbon group and a hydrocarbon group having a hydroxyl group in a terminal and/or side chain thereof;
   m represents 0, 1 or 2;
   each of x and y represents a composition ratio, x is satisfied with (0 < x < 100), and y is satisfied with (0 < y < 100);
   each of L¹, L³ and L⁴ independently represents a single bond or an organic linking group;
   L⁵ represents a single bond or a polyvalent organic linking group having one or more structures selected from the group consisting of CONH-, -NHCONH-, -OCONH-, -SO₂NH- and -SO₃-;
   each of Y¹ and Y³ independently represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ); each of Rₐ, R_{b} and R_{c} independently represents a hydrogen atom or a linear, branched or cyclic alkyl group; R_{d} represents a linear, branched or cyclic alkyl group; each of Rₑ and R_{f} independently represents a hydrogen atom, a linear, branched or cyclic alkyl group, an alkali metal, an alkaline earth metal or an onium; and R_{g} represents a linear, branched or cyclic alkyl group, a halogen atom, an inorganic anion or an organic anion.
[10] The hydrophilic film forming composition as set forth in any one of [1] to [9], which contains an alkoxide compound including an element selected among Si, Ti, Al and Zr.
[11] The hydrophilic film forming composition as set forth in any one of [1] to [10], which contains a colloidal silica.
[12] A hydrophilic member, including:
   a support having the hydrophilic film forming as set forth in any one of [1] to [11] coated thereon.
[13] The hydrophilic film forming composition as set forth in any one of [1] to [12],
   wherein the hydrophilic film forming composition contains a hydrophilic polymer having a hydrolyzable silyl group in a polymer terminal and a hydrophilic polymer having a hydrolyzable silyl group in a polymer side chain, with a mass ratio of the hydrophilic polymer having a hydrolyzable silyl group in a polymer terminal to the hydrophilic polymer having a hydrolyzable silyl group in a polymer side chain being in a range of from 50/50 to 5/95.
[14] A hydrophilic member, including:
   a support having the hydrophilic film forming composition as set forth in [13] coated thereon.
[15] A fin material having the hydrophilic film forming composition as set forth in any one of [1] to [11] and [13] coated thereon.
[16] An aluminum-made fin material, wherein the fin material as set forth in [15] is made of aluminum.
[17] A heat exchanger using the aluminum-made fin material as set forth in [16].

A principle of the invention is estimated as follows.
In hydrophilic film forming compositions and hydrophilic members in the prior art technologies, a film becomes negatively charged by influences of an alkoxide or a silane coupling group, and therefore, it may be considered that a stain factor having become cationic was easy to adhere thereto. In the invention, by using the foregoing component (A), the hydrophilic film forming composition becomes cationic, and the hydrophilic film on the surface of the hydrophilic member using the same becomes cationic, too. According to this, it may be considered that electric repulsion is generated between a stain factor such as a cationic surfactant, a calcium ion, a magnesium ion and the like and the hydrophilic member so that the stain factor is hard to adhere. Furthermore, in a preferred embodiment of the invention, it may be considered that when a hydroxyl group, a silane coupling group or the like was introduced into a compound having become positively charged, by forming a firm covalent bond formed with the hydrophilic polymer, cationic properties could be endured for a long period of time. Also, since it is estimated that a cationic compound is adsorbed on a cell membrane of a bacterium having become anionic, thereby exhibiting actions such as breakage of the cell membrane, inactivation of an enzymatic function and the like, it may be considered that antibacterial properties were imparted to the hydrophilic film forming composition.

### ADVANTAGES OF THE INVENTION

According to the invention, a hydrophilic film forming composition which is used for forming on the surface of a support of every sort a hydrophilic film having excellent anti-fogging properties, abrasion resistance, antifouling properties and antibacterial properties and a hydrophilic member including the instant hydrophilic film and having excellent anti-fogging properties, abrasion resistance, antibacterial properties and antifouling properties can be provided.

### BEST MODES FOR CARRYING OUT THE INVENTION

The invention is hereunder described in detail.
The hydrophilic film forming composition or hydrophilic member of the invention contains (A) a compound containing at least one positively charged nitrogen atom; (B) a hydrolyzable silyl group-containing hydrophilic polymer; and (C) a metal complex catalyst. Details of the respective components are hereunder described.

### [(A) Positively charged nitrogen atom-containing compound]

The positively charged nitrogen atom-containing compound (A) which can be used in the invention (hereinafter also referred to as "specified compound") exhibits a value of Log P of not more than 2, preferably not more than 1, and most preferably not more than 0. The "Log P" as referred to herein a water/octanol partition coefficient of compound as calculated using a software PCModels developed by Medicinal Chemistry Project Pomona College, Claremont, California, which is available from Daylight Chemical Information System Inc.
What the Log P is not more than 2 is preferable because not only the hydrophilicity of the member is not impaired, but the transparency of the hydrophilic film can be ensured; and when the Log P is not more than 1, the hydrophilicity or transparency can be more enhanced; and when it is not more than 0, higher hydrophilicity can be imparted. Also, the specified compound contains a positively charged nitrogen atom and preferably contains from 1 to 3 positively charged nitrogen atoms.
When the hydrophilic film forming composition of the invention contains the specified compound (A), a hydrophilic member having high antibacterial properties can be formed.

Furthermore, the specified compound (A) is preferably selected among compounds represented by from 1 to 8 of the general formula (1).

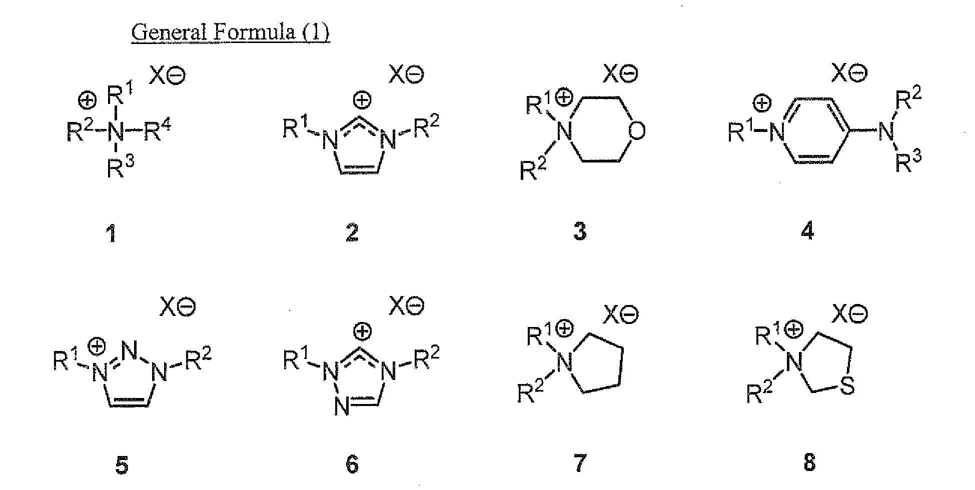

In the general formula (1), each of R¹, R², R³ and R⁴ independently represents a hydrocarbon group which may be substituted with a hydroxyl group and/or a silane coupling group; and X represents an anion.
In the general formula (1), Compounds 1 and 3 are preferable from the viewpoints of hydrophilicity and availability.

Examples of the hydrocarbon group in R¹ to R⁴ include an alkyl group, an aryl group and the like; and a linear, branched or cyclic alkyl group having from 1 to 8 carbon atoms is preferable. Specific examples thereof include a methyl group, an ethyl group, a propyl group, a butyl group, a pentyl group, a hexyl group, a heptyl group, an octyl group, an isopropyl group, an isobutyl group, a sec-butyl group, a t-butyl group, an isopentyl group, a neopentyl group, a 1-methylbutyl group, an isohexyl group, a 2-ethylhexyl group, a 2-methylhexyl group, a cyclopentyl group and the like.

Such a hydrocarbon group may further have a substituent. When the alkyl group has a substituent, the substituted alkyl group is constituted by binding of a substituent and an alkylene group. Here, a monovalent non-metal atomic group exclusive of hydrogen is used as the substituent. Preferred examples thereof include a halogen atom (for example, -F, -Br, -Cl or -I), a hydroxyl group, an alkoxy group, a trialkoxysilyl group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N',N'-dialkylureido group, an N'-arylureido group, an N',N'-diarylureido group, an N'-alkyl-N'-arylureido group, an N-alkylureido group, an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, an arylsulfonyl group, a sulfo group (-SO₃H) and a conjugated base group thereof (hereinafter referred to as "sulfonate group"), an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) and a conjugated base group thereof (hereinafter referred to as "phosphonate group"), a dialkylphosphono group (-PO₃H(alkyl)₂), a diarylphosphono group (-PO₃(aryl)₂), an alkylarylphosphono group (-PO₃(alkyl)(aryl)), a monoalkylphosphono group (-PO₃H(alkyl)) and a conjugated base group thereof (hereinafter referred to as "alkylphosphonate group"), a monoarylphosphono group (-PO₃H(aryl)) and a conjugated base group thereof (hereinafter referred to as "arylphosphonate group"), a phosphonoxy group (-OPO₃H₂) and a conjugated base group thereof (hereinafter referred to as "phosphonatoxy group"), a dialkylphosphonoxy group (-OPO₃(alkyl)₂), a diarylphosphonoxy group (-OPO₃(aryl)₂)), an alkylarylphosphonoxy group (-OPO₃(alkyl)(aryl)), a monoalkylphosphonoxy group (-OPO₃H(alkyl)) and a conjugated base group thereof (hereinafter referred to as "alkylphosphonatoxy group"), a monoarylphosphonoxy group (-OPO₃H(aryl)) and a conjugated base group thereof (hereinafter referred to as "arylphosphonatoxy group"), a morphono group, a cyano group, a nitro group, an aryl group, an alkenyl group and an alkynyl group.

In these substituents, specific examples of the alkyl group include the same alkyl groups as exemplified in R¹ to R⁴; and specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group, a phosphonatophenyl group and the like. Also, examples of the alkenyl group include a vinyl group, a 1-propenyl group, a 1-butenyl group, a cinnamyl group, a 2-chloro-1-ethenyl group and the like; and examples of the alkynyl group include an ethynyl group, a 1-propynyl group, a 1-butynyl group, a trimethylsilylethynyl group and the like. Examples of G¹ in the acyl group (G¹CO-) include hydrogen and the foregoing alkyl groups and aryl groups.

Of these substituents, a halogen atom (for example, -F, -Br, -Cl or -I), an alkoxy group, an alkoxysilyl group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonate group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonate group, a dialkylphosphono group, a diarylphosphono group, a monoalkylphosphono group, an alkylphosphonate group, a monoarylphosphono group, an arylphosphonate group, a phosphonoxy group, a phosphonatoxy group, an aryl group and an alkenyl group are more preferable.

On the other hand, examples of the alkylene group in the substituted alkyl group include a divalent organic residue derived from the foregoing alkyl group having from 1 to 20 carbon atoms by removing any one of the hydrogen atoms. Preferred examples thereof include a linear alkylene group having from 1 to 12 carbon atoms, a branched alkylene group having from 3 to 12 carbon atoms and a cyclic alkylene group having from 5 to 10 carbon atoms. Specific examples of the preferred substituted alkyl group obtained by combining the instant substituent with the alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxoethyl group, a 2-oxopropyl group, a carboxypropyl group, a methoxycarbonylethyl group, an allyloxycarbonylbutyl group, a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, a 3-butynyl group and the like.

X represents an anion and is preferably selected among a halogen, HCO₃ and PF₆.

In the invention, R¹ to R⁴ are each preferably an alkyl group or an alkyleneoxy group, each of which may be substituted with a hydroxyl group and/or a silane coupling group. From the viewpoints of effects and easiness of availability, R¹ to R⁴ are each more preferably a hydrogen atom, a methyl group, an ethyl group or a propyl group.
In the invention, the range of a molecular weight of the positively charged nitrogen atom-containing compound is preferably from 100 to 1,000 and more preferably from 200 to 800. In view of the fact that the compound is a low-molecular compound having a molecular weight of from 200 to 800, the compound is unevenly distributed on the surface in the film, thereby enabling one to form a hydrophilic member having more excellent antibacterial properties and antifouling properties.

In this specification, the bacteria refer to a germ, a fungus and a virus and are described in Kokinzai No Kagaku (Science of Antibacterial Agents), by Kogyo Chosakai Publishing, Inc. and Kokin Kokabizai No Kensa Hyokaho (Methods of Examination and Evaluation of Antibacterial and Antifungal Agents), by NST; and *Escherichia coli*, *Staphylococcus aureus* and the like are generally known. The hydrophilic member of the invention exhibits excellent antibacterial properties against these bacteria.

Specific examples of the specified compound (A) [Illustrative Compounds (1) to (33)] are given below, but it should not be construed that the invention is limited thereto.

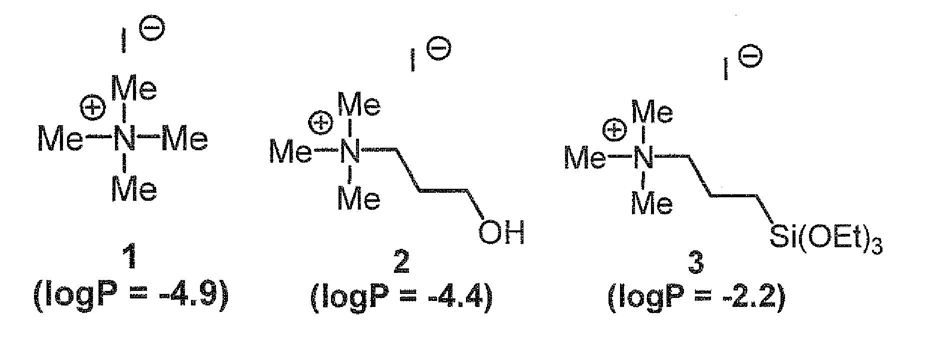

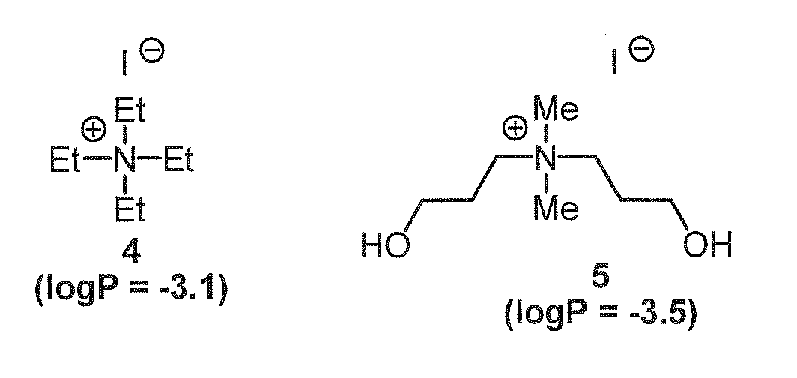

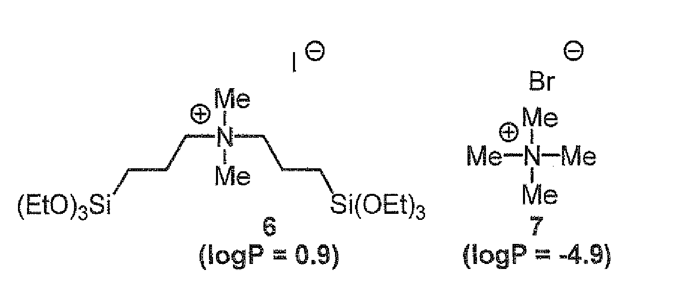

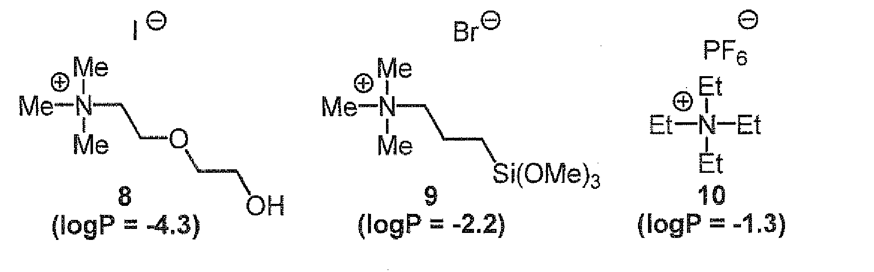

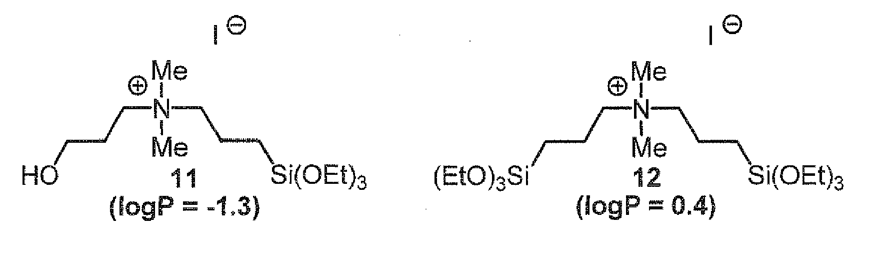

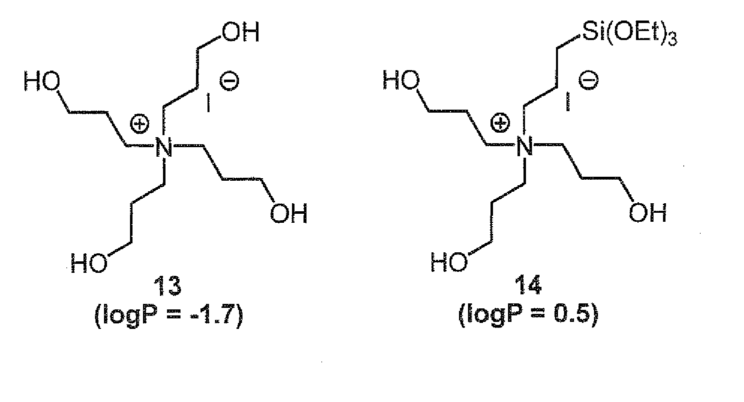

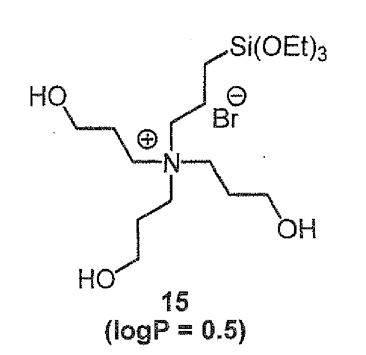

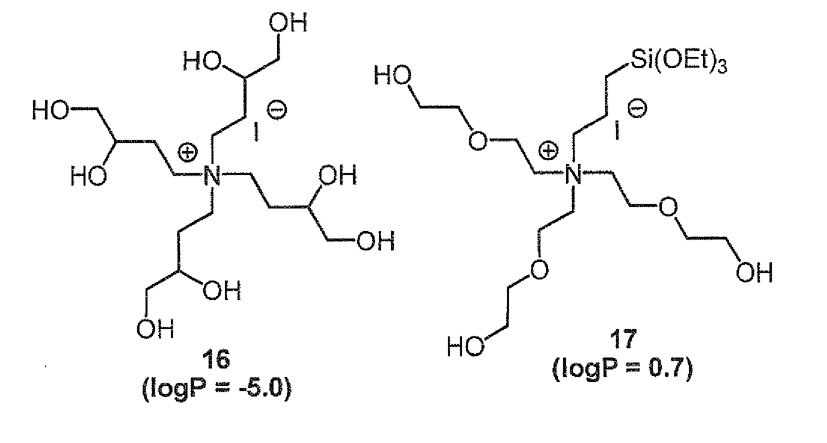

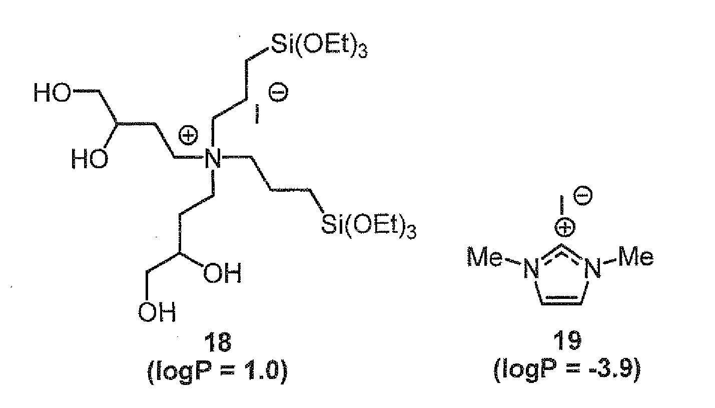

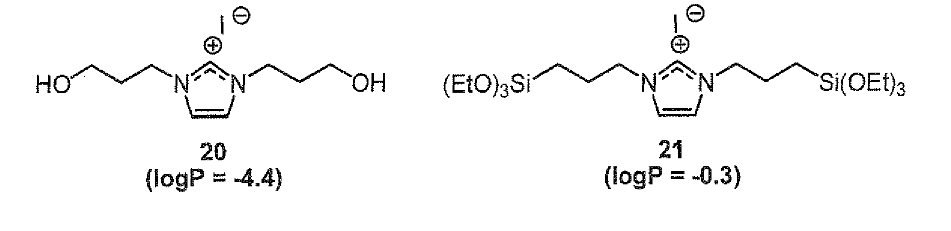

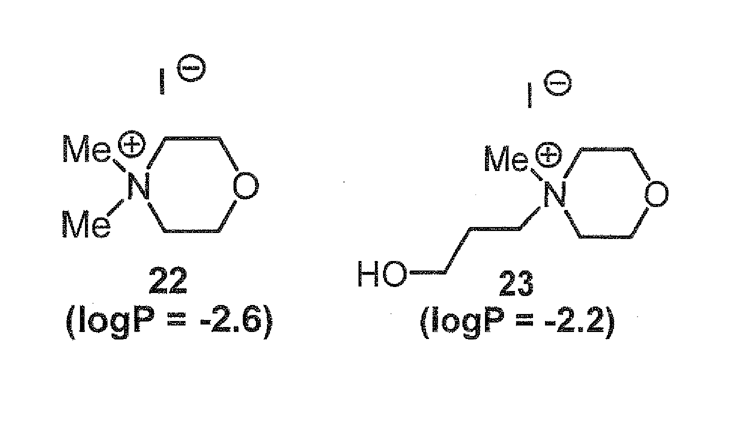

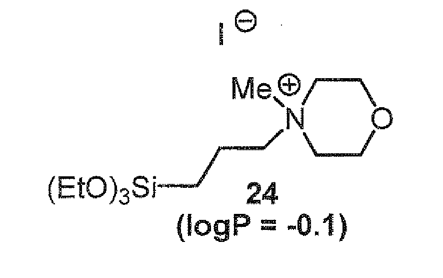

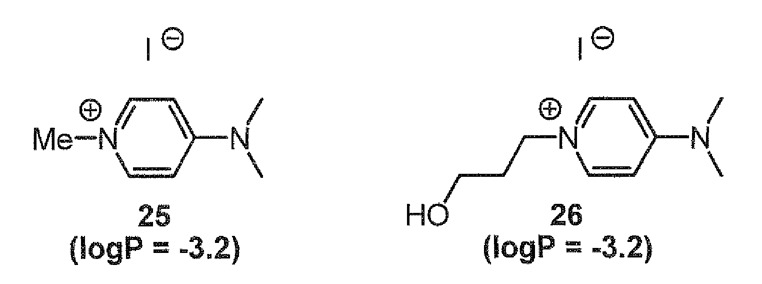

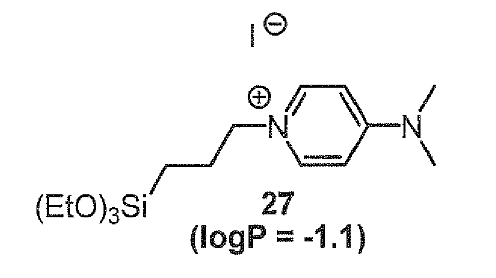

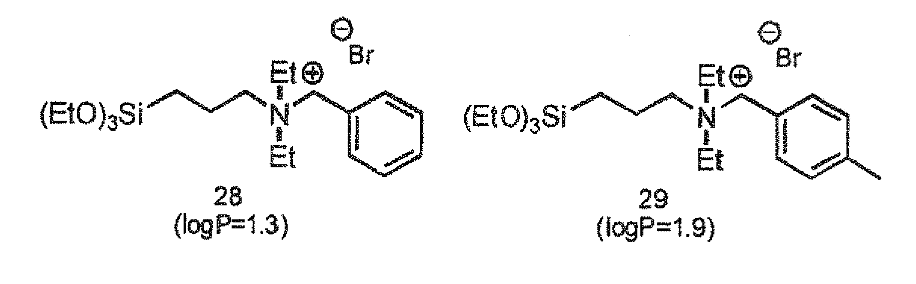

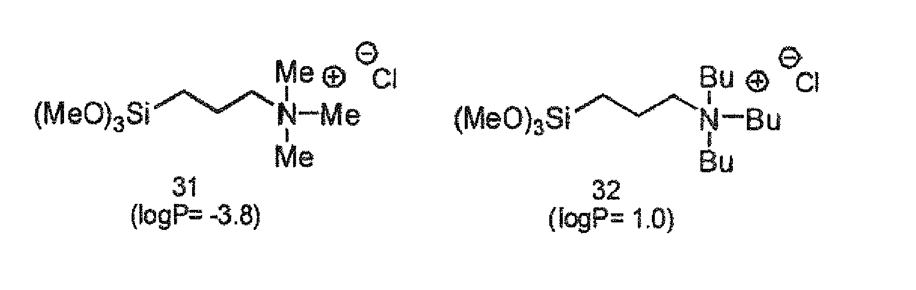

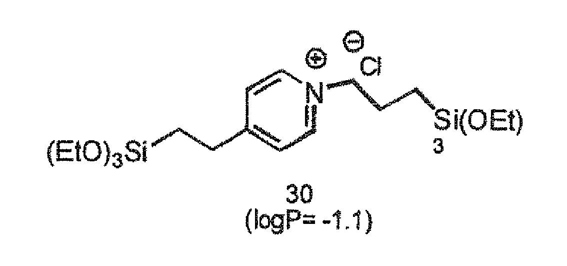

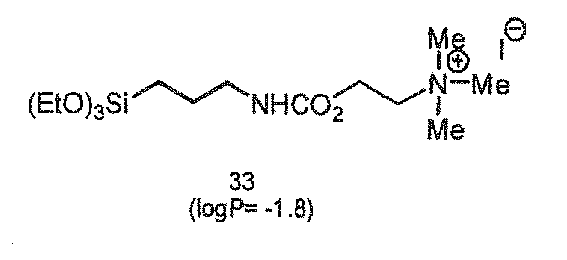

From the viewpoints of curing properties and hydrophilicity, the specified compound (A) according to the invention is preferably contained in an amount in the range of from 1 to 30 % by mass, and more preferably from 5 to 20 % by mass relative to a nonvolatile component in the hydrophilic film forming composition of the invention. When the amount of the specified compound (A) is less than 1 % by mass, the antibacterial properties of the hydrophilic member formed from the hydrophilic film forming composition of the invention is not sufficient; and what it exceeds 30 % by mass is not preferable in view of the transparency of the member.
These may be used singly or in combinations of two or more kinds thereof. The "nonvolatile component" as referred to herein means a component from which a volatile solvent has been eliminated. Also, all of the compounds as the specified compound (A) can be easily prepared, and a part thereof is commercially available.

### [(B) Hydrolyzable silyl group-containing hydrophilic polymer]

The hydrolyzable silyl group-containing hydrophilic polymer (B) which can be used in the invention (hereinafter also referred to as "specified hydrophilic polymers") is preferably one having a hydrolyzable silyl group in a polymer terminal or side chain.

Furthermore, the specified hydrophilic polymer (B) preferably includes a structure represented by the general formula (2) or (3).

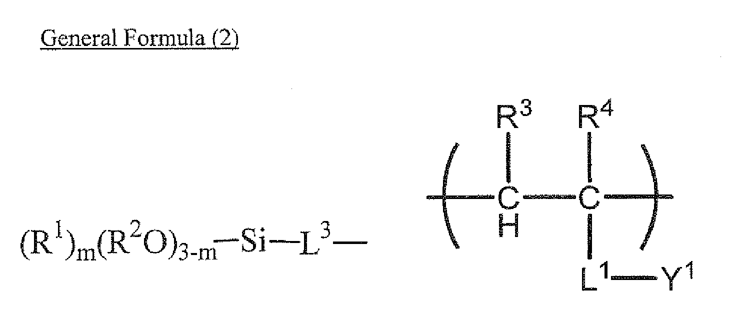

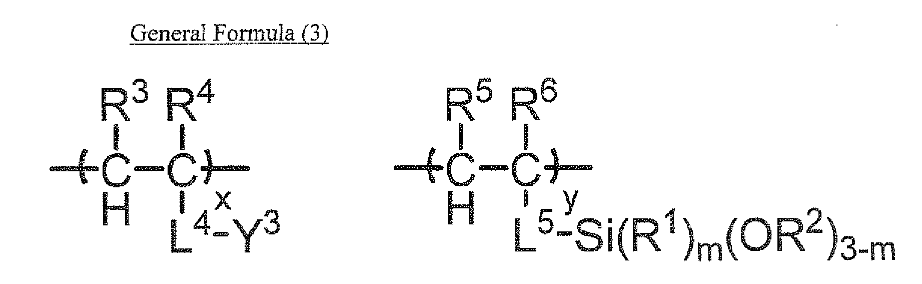

In the general formulae (2) and (3), each of R¹, R², R³ and R⁵ independently represents a hydrogen atom or a hydrocarbon group (preferably one having from 1 to 8 carbon atoms); each of R⁴ and R⁶ independently represents any one of a hydrogen atom, a hydrocarbon group (preferably one having from 1 to 8 carbon atoms) and a hydrocarbon group having a hydroxyl group in a terminal and/or side chain thereof (preferably one having from I to 8 carbon atoms); m represents 0, 1 or 2; each of x and y represents a composition ratio, x is satisfied with (0 < x < 100), and y is satisfied with (0 < y < 100); each of L¹, L³ and L⁴ independently represents a single bond or an organic linking group; L⁵ represents a single bond or a polyvalent organic linking group having one or more structures selected from the group consisting of CONH-, -NHCONH-, -OCONH-, -SO₂NH- and -SO₃-; each of Y¹ and Y³ independently represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(P_{d})(Rₑ); each of Rₐ, R_{b} and R_{c} independently represents a hydrogen atom or a linear, branched or cyclic alkyl group (preferably one having from 1 to 8 carbon atoms); R_{d} represents a linear, branched or cyclic alkyl group (preferably one having from 1 to 8 carbon atoms); each of Rₑ and R_{f} independently represents a hydrogen atom, a linear, branched or cyclic alkyl group (preferably one having from 1 to 8 carbon atoms), an alkali metal, an alkaline earth metal or an onium; and R_{g} represents a linear, branched or cyclic alkyl group (preferably one having from 1 to 8 carbon atoms), a halogen atom, an inorganic anion or an organic anion.

In the case where each of R¹ to R⁶ represents a hydrocarbon group, examples of the hydrocarbon group include an alkyl group, an aryl group and the like; and a linear, branched or cyclic alkyl group having from 1 to 8 carbon atoms is preferable. Specific examples thereof include a methyl group, an ethyl group, a propyl group, a butyl group, a pentyl group, a hexyl group, a heptyl group, an octyl group, an isopropyl group, an isobutyl group, a sec-butyl group, a t-butyl group, an isopentyl group, a neopentyl group, a 1-methylbutyl group, an isohexyl group, a 2-ethylhexyl group, a 2-methylhexyl group, a cyclopentyl group and the like.
From the viewpoints of effects and easiness of availability, R¹ to R⁶ are each preferably a hydrogen atom, a methyl group or an ethyl group.

Such a hydrocarbon group may further have a substituent. When the alkyl group has a substituent, the substituted alkyl group is constituted by binding of a substituent and an alkylene group. Here, a monovalent non-metal atomic group exclusive of hydrogen is used as the substituent. Preferred examples thereof include a halogen atom (for example, -F, -Br, -Cl or -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N',N'-dialkylureido group, an N'-arylureido group, an N',N'-diarylureido group, an N'-alkyl-N'-arylureido group, an N-alkylureido group, an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylearbamoyl group, an N-alkyl-N-arylcarbamoyl group, an alkylsulfinyl group, an arylsulfinyl group, an alkylsulfonyl group, an arylsulfonyl group, a sulfo group (-SO₃H) and a conjugated base group thereof (hereinafter referred to as "sulfonate group"), an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) and a conjugated base group thereof (hereinafter referred to as "phosphonate group"), a dialkylphosphono group (-PO₃H(alkyl)₂), a diarylphosphono group (-PO₃(aryl)₂), an alkylarylphosphono group (-PO₃(alkyl)(aryl)), a monoalkylphosphono group (-PO₃H(alkyl)) and a conjugated base group thereof (hereinafter referred to as "alkylphosphonate group"), a monoarylphosphono group (-PO₃H(aryl)) and a conjugated base group thereof (hereinafter referred to as "arylphosphonate group"), a phosphonoxy group (-OPO₃H₂) and a conjugated base group thereof (hereinafter referred to as "phosphonatoxy group"), a dialkylphosphonoxy group (-OPO₃(alkyl)₂), a diarylphosphonoxy group (-OPO₃(aryl)₂)), an alkylarylphosphonoxy group (-OPO₃(alkyl)(aryl)), a monoalkylphosphonoxy group (-OPO₃H(alkyl)) and a conjugated base group thereof (hereinafter referred to as "alkylphosphonatoxy group"), a monoarylphosphonoxy group (-OPO₃H(aryl)) and a conjugated base group thereof (hereinafter referred to as "arylphosphonatoxy group"), a morphono group, a cyano group, a nitro group, an aryl group, an alkenyl group and an alkynyl group.

In these substituents, specific examples of the alkyl group include the same alkyl groups as exemplified in R¹ to R⁸; and specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group, a phosphonatophenyl group and the like. Also, examples of the alkenyl group include a vinyl group, a 1-prapenyl group, a 1-butenyl group, a cinnamyl group, a 2-chloro-1-ethenyl group and the like; and examples of the alkynyl group include an ethynyl group, a 1-propynyl group, a 1-butynyl group, a trimethylsilylethynyl group and the like. Examples of G¹ in the acyl group (G¹CO-) include hydrogen and the foregoing alkyl groups and aryl groups.

Of these substituents, a halogen atom (for example, -F, -Br, -Cl or -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonate group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonate group, a dialkylphosphono group, a diarylphosphono group, a monoalkylphosphono group, an alkylphosphonate group, a monoarylphosphono group, an arylphosphonate group, a phosphonoxy group, a phosphonatoxy group, an aryl group and an alkenyl group are more preferable.

On the other hand, examples of the alkylene group in the substituted alkyl group include a divalent organic residue derived from the foregoing alkyl group having from 1 to 20 carbon atoms by removing any one of the hydrogen atoms. Preferred examples thereof include a linear alkylene group having from 1 to 12 carbon atoms, a branched alkylene group having from 3 to 12 carbon atoms and a cyclic alkylene group having from 5 to 10 carbon atoms. Specific examples of the preferred substituted alkyl group obtained by combining the instant substituent with the alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxoethyl group, a 2-oxopropyl group, a carboxypropyl group, a methoxycarbonylethyl group, an allyloxycarbonylbutyl group, a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, a 3-butynyl group and the like.

Each of L¹, L³ and L⁴ represents a single bond or an organic linking group. The "single bond" as referred to herein means that a principal chain of the polymer is bonded directly to Y¹, Y³ or (R₁)ₘ(R₂O)₃₋ₘ-Si- without a connecting chain. Furthermore, the "organic linking group" as referred to herein means a linking group composed of a non-metal atom. Specifically, the linking group is one composed of from 0 to 200 carbon atoms, from 0 to 150 nitrogen atoms, from 0 to 200 oxygen atoms, from 0 to 400 hydrogen atoms and from 0 to 100 sulfur atoms. More specific examples of the linking group include the following structural units or those constituted through a combination thereof.

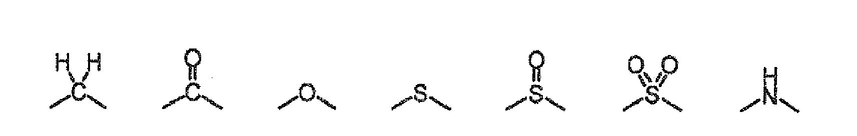

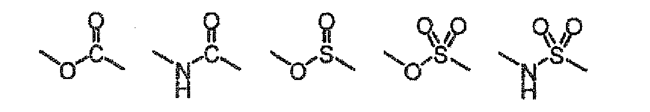

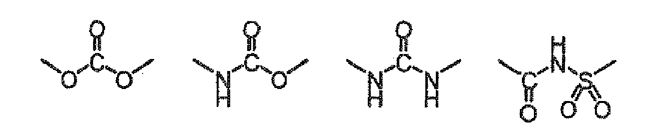

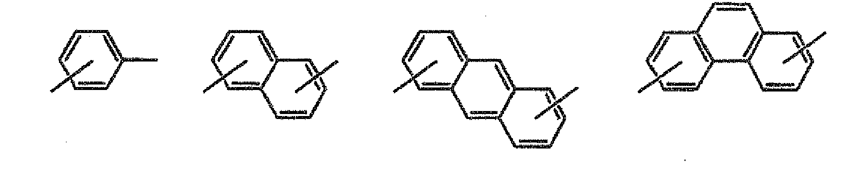

Also, each of L¹, L³ and L⁴ may be formed from a polymer or an oligomer. Specifically, it is preferable that the polymer or oligomer includes polyacrylates, polymethacrylates, polyacrylonitriles, polyvinyls or polystyrenes each composed of an unsaturated double bond based monomer, or the like. Other preferred examples thereof include poly(oxyalkylenes), polyurethanes, polyureas, polyesters, polyamides, polyimides, polycarbonates, polyamino acids, polysiloxanes and the like. Of these, polyacrylates, polymethacrylates, polyacrylonitriles, polyvinyls and polystyrenes are preferable, with polyacrylates and polymethacrylates being more preferable. The structural unit which is used in such a polymer or oligomer may be used singly or in combinations of two or more kinds thereof. Also, in the case where L¹ is a polymer or an oligomer, the number of constitutional elements is not particularly limited, and its molecular weight is preferably from 1,000 to 1,000,000, more preferably from 1,000 to 500,000, and most preferably from 1,000 to 200,000.

L⁵ represents a single bond or a polyvalent organic linking group having one or more structures selected from the group consisting of CONH-, -NHCONH-, -OCONH-, -SO₂NH- and -SO₃-. The "single bond" as referred to herein means that a principal chain of the polymer is bonded directly to the Si atom without a connecting chain. Also, two or more of the foregoing structures may be present in L⁵. In that case, each structure may be the same as or different from every other structure. So far as one or more of the foregoing structures are contained, other structure can have the same structure as those exemplified for L¹, L³ and L⁴.

Also, each of Y¹ and Y³ is a hydrophilic group and represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ). Here, each of Rₐ, R_{b} and R_{c} independently represents a hydrogen atom or a linear, branched or cyclic alkyl group having from 1 to 8 carbon atoms; R_{d} represents a linear, branched or cyclic alkyl group having from 1 to 8 carbon atoms; each of Rₑ and R_{f} independently represents a hydrogen atom, a linear, branched or cyclic alkyl group having from 1 to 8 carbon atoms, an alkali metal, an alkaline earth metal or an onium; and R_{g} represents a linear, branched or cyclic alkyl group having from 1 to 8 carbon atoms, a halogen atom, an inorganic anion or an organic anion. Also, with respect to -CON(Rₐ)(R_{b}), -OCON(Rₐ)(R_{b}), -NHCON(Rₐ)(R_{b}), -SO₂N(Rₐ)(R_{b}), -PO₃(Rₑ)(R_{f}), -OPO₃(Rₑ)(R_{f}), -PO₂(R_{d})(Rₑ), -N(Rₐ)(R_{b})(R_{c}) or -N(Rₐ)(R_{b})(R_{c})(R_{g}), Rₐ to R_{g} may be bonded to each other to form a ring; and the formed ring may be a heterocyclic ring containing a hetero atom such as an oxygen atom, a sulfur atom, a nitrogen atom and the like. Each of Rₐ to R_{g} may further have a substituent, and examples of the substituent which can be introduced include the same substituents as those which can be introduced in the case where the foregoing R¹ to R⁶ are each an alkyl group.

Specific examples which are suitable for Rₐ, R_{b} or R_{c} include a hydrogen atom, a methyl group, an ethyl group, a propyl group, a butyl group, a pentyl group, a hexyl group, a heptyl group, an octyl group, an isopropyl group, an isobutyl group, a sec-butyl group, a t-butyl group, an isopentyl group, a neopentyl group, a 1-methylbutyl group, an isohexyl group, a 2-ethylhexyl group, a 2-methylhexyl group, a cyclopentyl group and the like.
Specific examples of R_{d} which is suitable include a methyl group, an ethyl group, a propyl group, a butyl group, a pentyl group, a hexyl group, a heptyl group, an octyl group, an isopropyl group, an isobutyl group, a sec-butyl group, a t-butyl group, an isopentyl group, a neopentyl group, a 1-methylbutyl group, an isohexyl group, a 2-ethylhexyl group, a 2-methylhexyl group, a cyclopentyl group and the like.
Specific examples of Rₑ and R_{f} include, in addition to the alkyl groups as exemplified for Rₐ to R_{d}, a hydrogen atom; an alkali metal such as lithium, sodium, potassium and the like; an alkaline earth metal such as calcium, barium and the like; and an onium such as ammonium, iodonium, sulfonium and the like.
Specific examples of R_{g} include, in addition to the alkyl groups as exemplified for Rₐ to R_{d}, a hydrogen atom; a halogen atom such as a fluorine atom, a chlorine atom, a bromine atom and the like; an inorganic anion such as a nitrate anion, a sulfate anion, a tetrafluoroborate anion, a hexafluorophosphate anion and the like; and an organic anion such as a methanesulfonate anion, a trifluoromethanesulfonate anion, a nonafluorobutanesulfonate anion, a p-toluenesulfonate anion and the like.
Also, specifically,-CO₂⁻Na⁺, -CONH₂, -SO₃⁻Na⁺, -SO₂NH₂, -PO₃H₂ or the like is preferable as such Y

Each of x and y represents a composition ratio, x is satisfied with (0 < x < 100), and y is satisfied with (0 < y < 100). In the general formula (3), x is preferably in the range of (10 < x < 99), and more preferably in the range of (50 < x < 99). y is preferably in the range of (1 < y < 90), and more preferably in the range of (1 < y < 50).
Here, the structural units constituting the polymer chain may be all the same, or plural different structural units may be contained. In that case, it is preferable that the composition ratios of the structural units fall within the foregoing ranges.

A molecular weight of the specified hydrophilic polymer (B) is preferably from 1,000 to 1,000,000, more preferably from 1,000 to 500,000, and most preferably from 1,000 to 200,000.

Specific examples of the specified hydrophilic polymer (B) having a silane coupling group in a polymer terminal [Illustrative Compounds (1-1) to (1-47)] are given below, but it should not be construed that the invention is limited thereto.

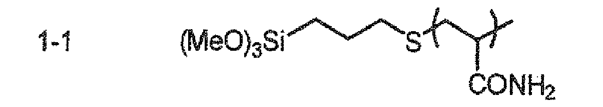

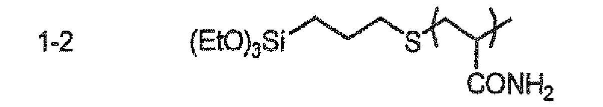

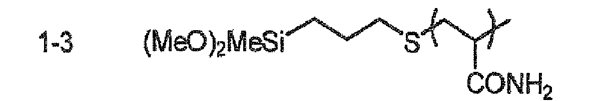

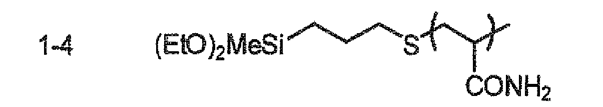

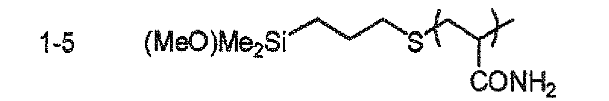

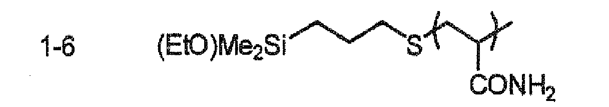

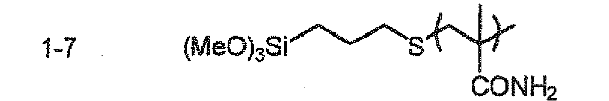

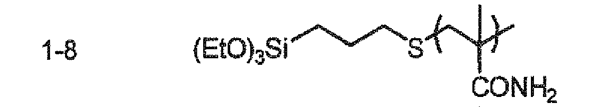

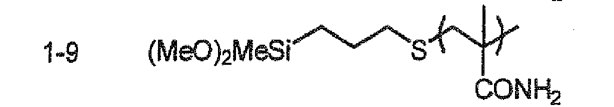

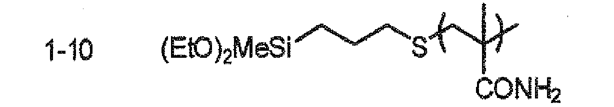

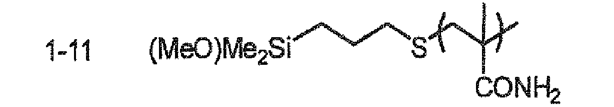

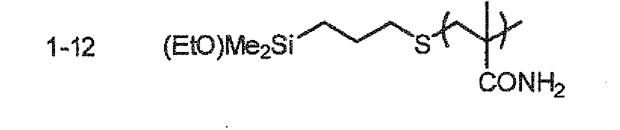

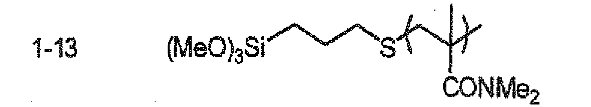

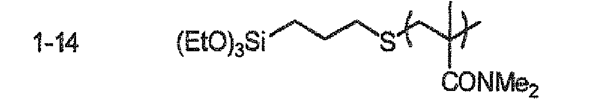

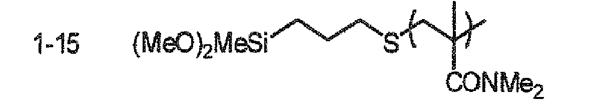

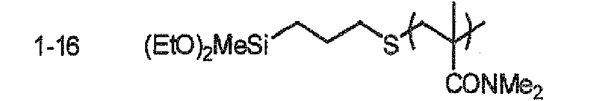

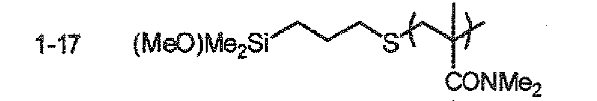

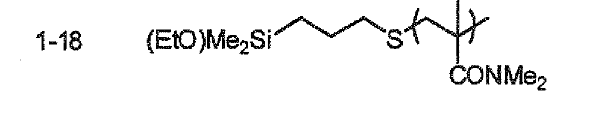

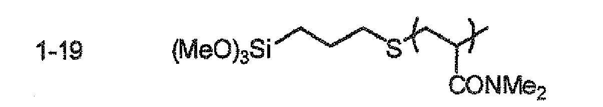

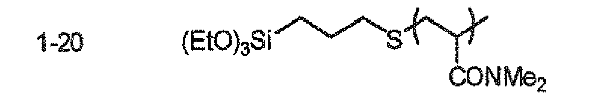

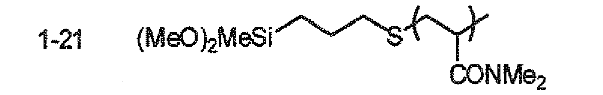

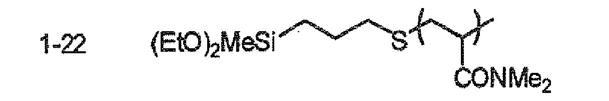

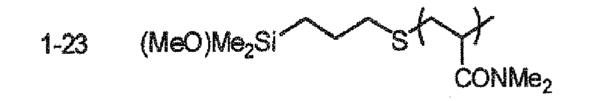

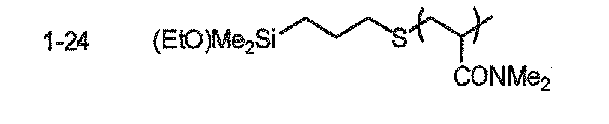

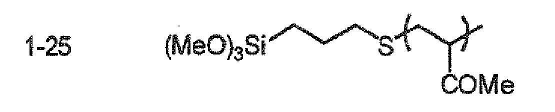

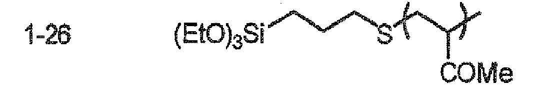

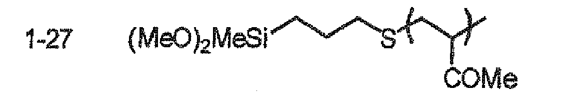

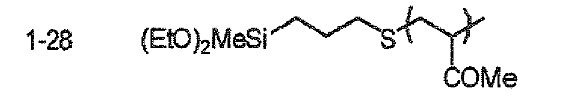

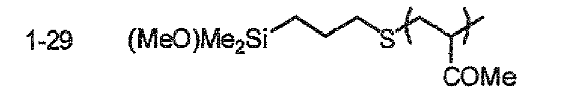

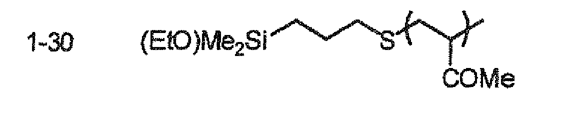

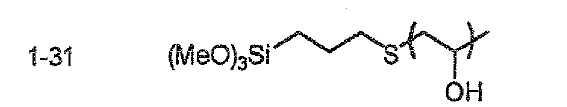

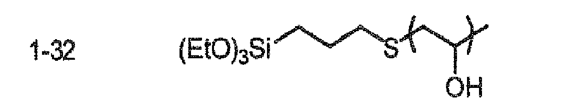

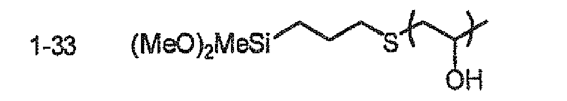

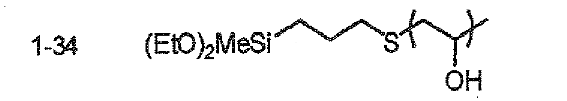

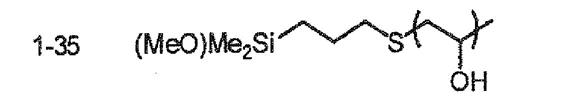

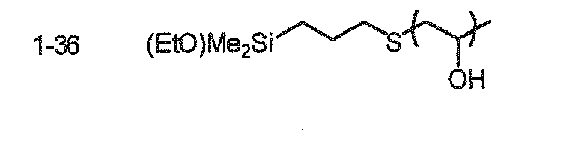

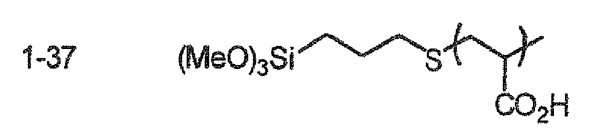

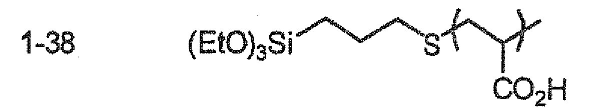

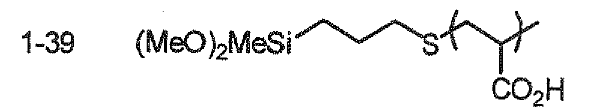

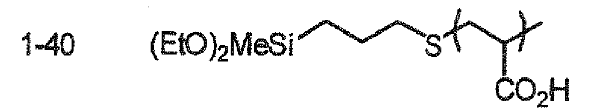

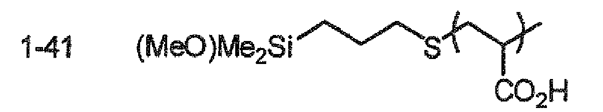

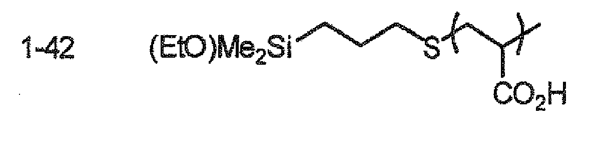

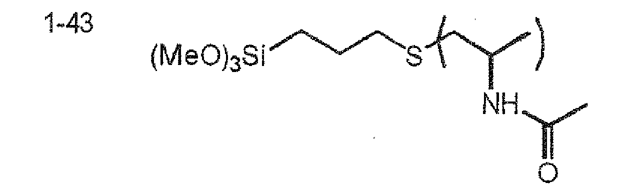

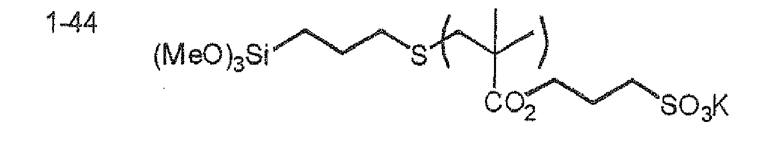

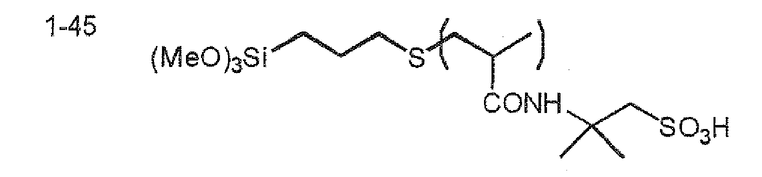

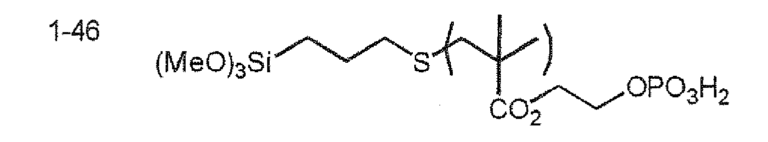

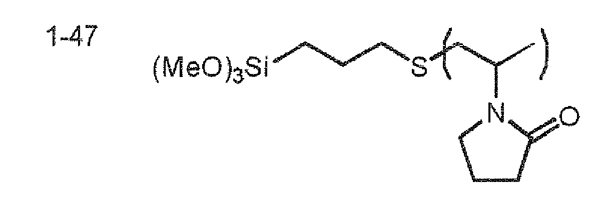

The molecular weights of the foregoing compounds are shown below.

**Table 1**

| Compound | Molecular weight | Compound | Molecular weight | Compound | Molecular weight | Compound | Molecular weight |
|---|---|---|---|---|---|---|---|
| 1-1 | 8,000 | 1-15 | 9,000 | 1-29 | 8,000 | 1-43 | 9,000 |
| 1-2 | 4,000 | 1-16 | 12,000 | 1-30 | 9,000 | 1-44 | 9,000 |
| 1-3 | 11,000 | 1-17 | 13,000 | 1-31 | 9,000 | 1-45 | 10,000 |
| 1-4 | 9,000 | 1-18 | 11,000 | 1-32 | 11,000 | 1-46 | 11,000 |
| 1-5 | 12,000 | 1-19 | 8,000 | 1-33 | 9,000 | 1-47 | 8,000 |
| 1-6 | 13,000 | 1-20 | 11,000 | 1-34 | 12,000 | | |
| 1-7 | 11,000 | 1-21 | 11,000 | 1-35 | 11,000 | | |
| 1-8 | 8,000 | 1-22 | 8,000 | 1-36 | 8,000 | | |
| 1-9 | 9,000 | 1-23 | 9,000 | 1-37 | 9,000 | | |
| 1-10 | 10,000 | 1-24 | 13,000 | 1-38 | 12,000 | | |
| 1-11 | 12,000 | 1-25 | 11,000 | 1-39 | 8,000 | | |
| 1-12 | 13,000 | 1-26 | 8,000 | 1-40 | 9,000 | | |
| 1-13 | 11,000 | 1-27 | 9,000 | 1-41 | 13,000 | | |
| 1-14 | 8,000 | 1-28 | 12,000 | 1-42 | 11,000 | | |

Specific examples of the specified hydrophilic polymer (B) having a silane coupling group in a polymer side chain [Illustrative Compounds (1) to (53)] are given below along with their mass average molecular weights (M.W.), but it should not be construed that the invention is limited thereto. It is meant that the polymers described below as specific examples are a random copolymer in which the described respective structural units are contained in the described molar ratio.

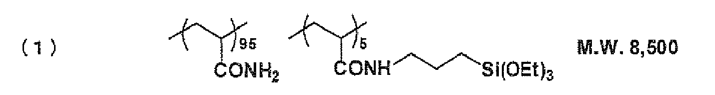

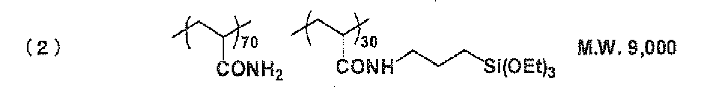

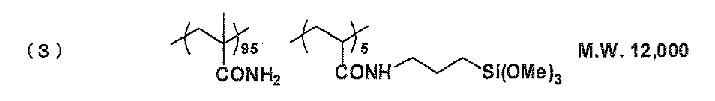

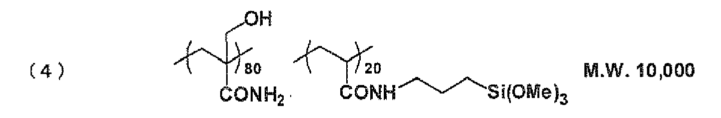

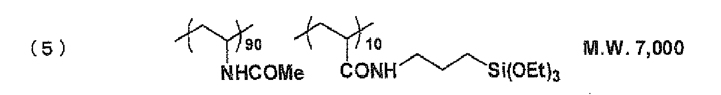

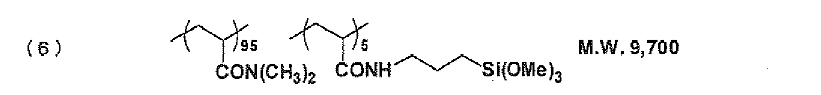

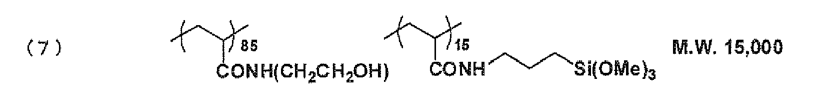

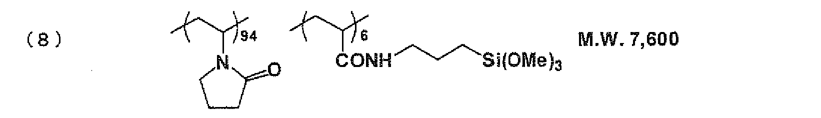

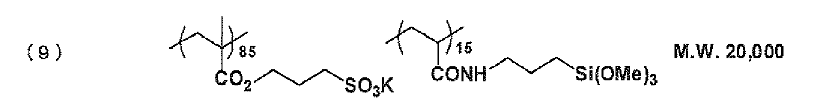

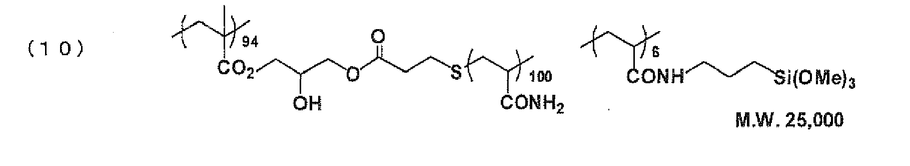

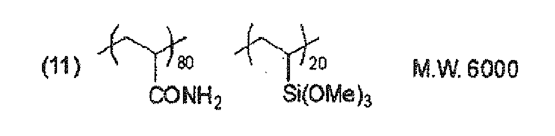

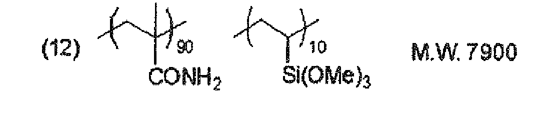

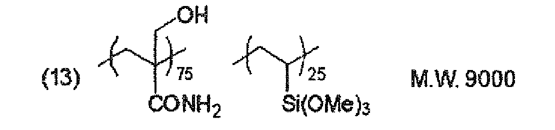

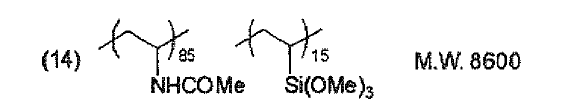

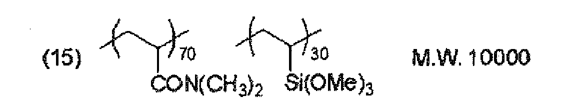

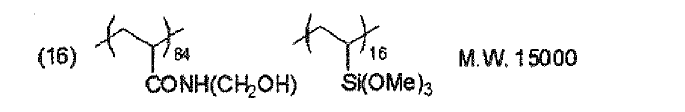

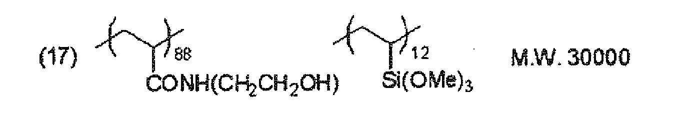

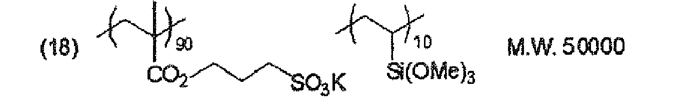

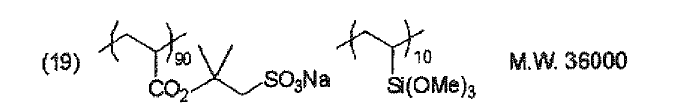

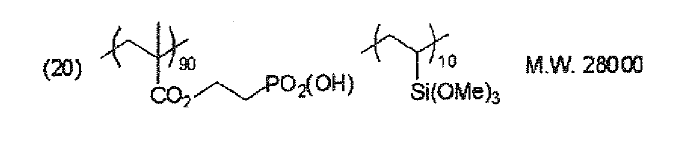

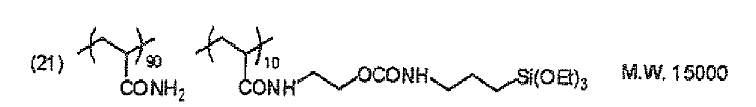

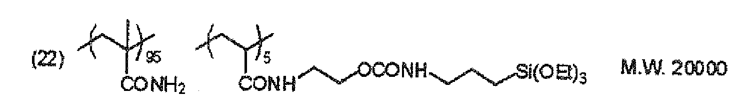

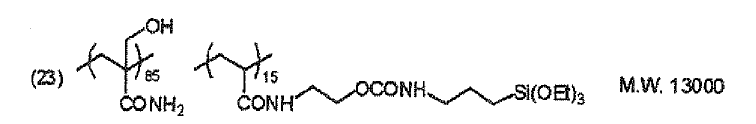

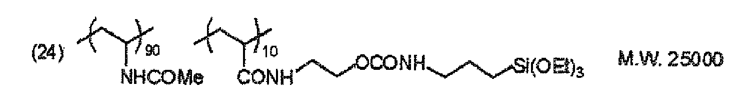

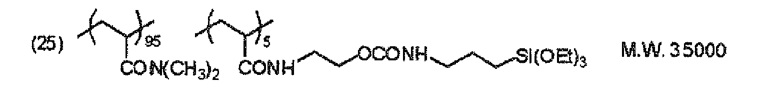

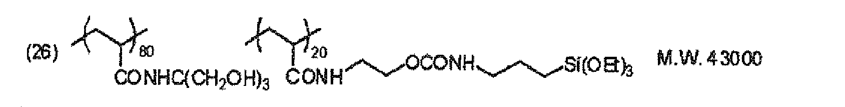

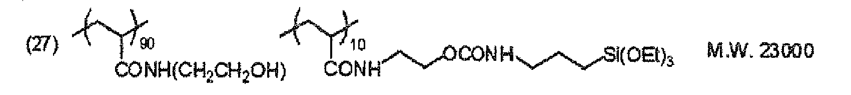

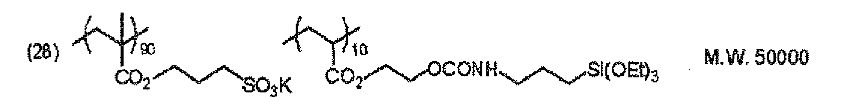

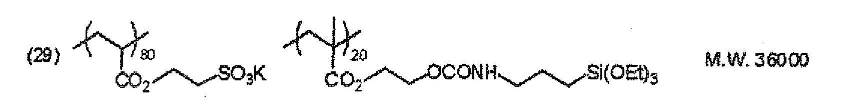

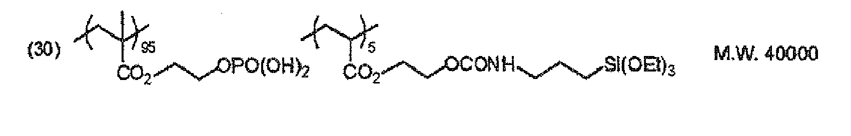

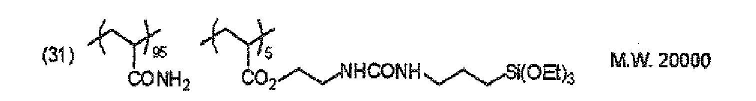

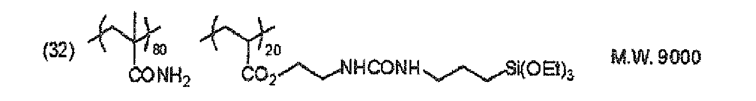

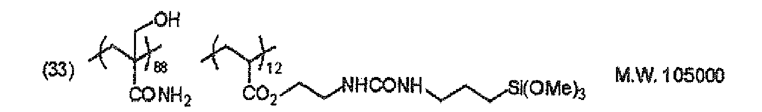

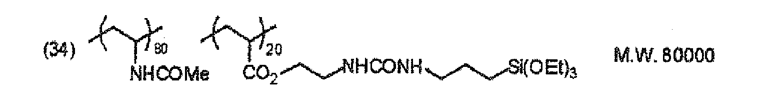

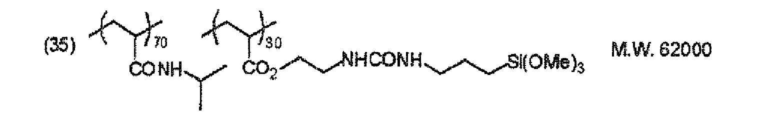

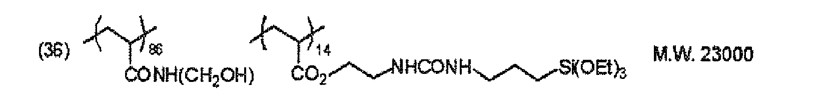

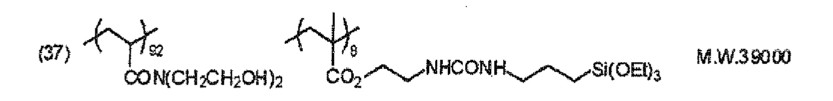

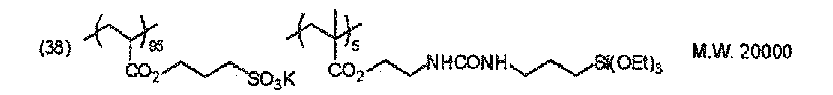

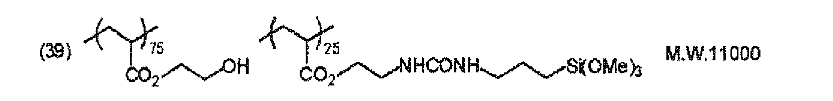

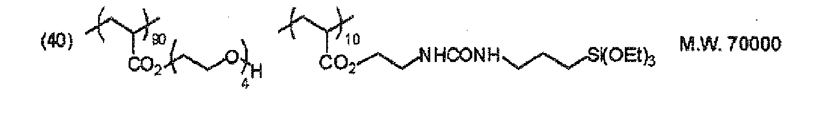

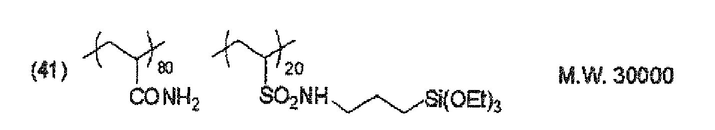

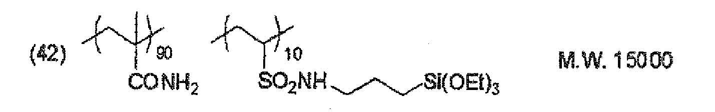

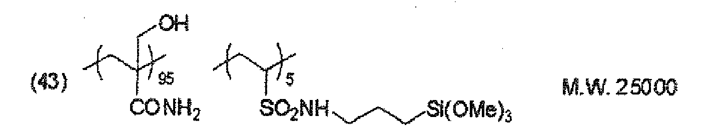

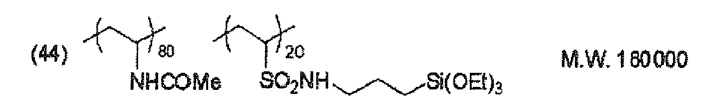

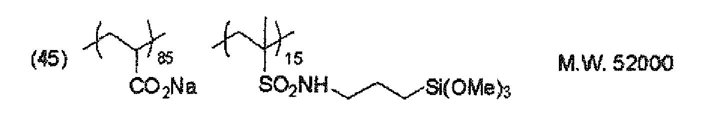

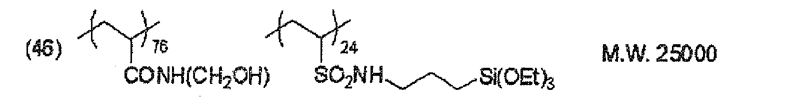

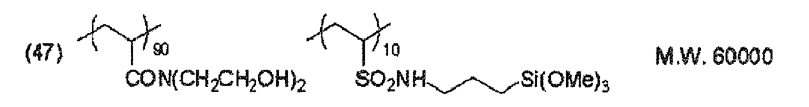

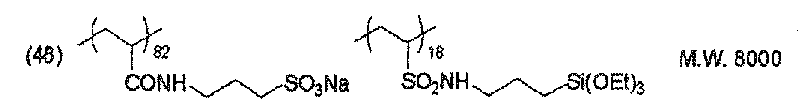

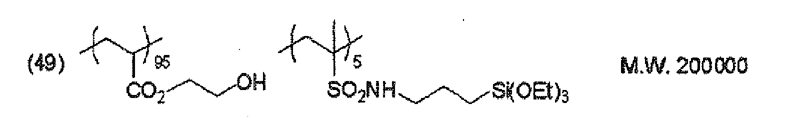

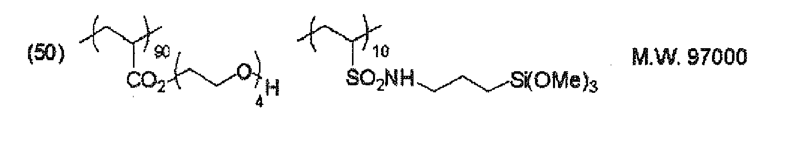

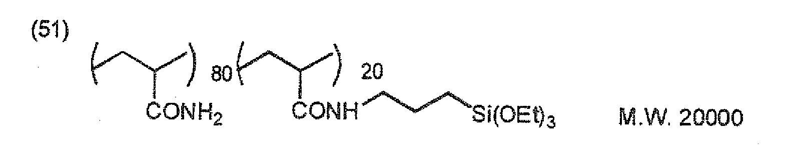

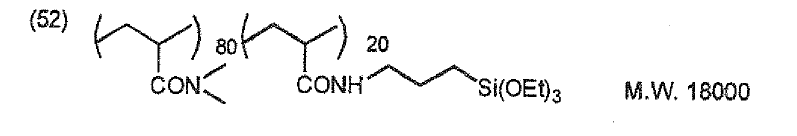

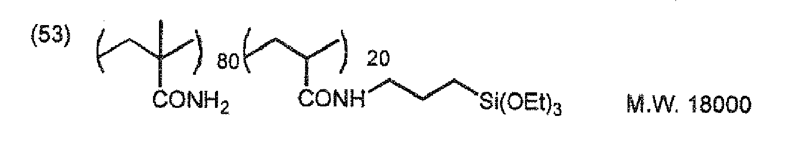

Each of the foregoing compounds for synthesizing the specified hydrophilic polymer (B) is commercially available and can be easily synthesized. As the radical polymerization method for synthesizing the specified hydrophilic polymer (B), all of conventionally known methods can be employed. Specifically, the general radical polymerization method is described in, for example, Shin Kobunshi Jikken-gaku (New Polymer Experimentology) 3: Synthesis and Reaction 1 of Polymer (edited by The Society of Polymer Science, Japan and published by Kyoritsu Shuppan Co., Ltd.); Shin Jikken Kagaku Koza (New Experimental Chemistry Course) 19: Polymer Chemistry (1) (edited by The Chemical Society of Japan and published by Maruzen Co., Ltd.); and Busshitsu Kogaku Koza (Material Engineering Course): Polymer Synthesis Chemistry (published by Tokyo Denki University Press). These can be applied.

Also, the specified hydrophilic polymer (B) may be a copolymer with other monomer as described later. Examples of other monomer to be used include known monomers, for example, acrylic esters, methacrylic esters, acrylamides, methacrylamides, vinyl esters, styrenes, acrylic acid, methacrylic acid, acrylozaitrile, maleic anhydride, maleic acid imide and the like. By copolymerizing with such a monomer, various physical properties, for example, fabrication properties, film strength, hydrophilicity, hydrophobicity, solubility, reactivity, stability and the like can be improved.

Specific examples of the acrylic ester include methyl acrylate, ethyl acrylate, n-propyl or isopropyl acrylate, n-butyl, isobutyl, sec-butyl or t-butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate, 2-(hydroxyphenylcarbonyloxy)ethyl acrylate and the like.

Specific examples of the methacrylic ester include methyl methacrylate, ethyl methacrylate, n-propyl or isopropyl methacrylate, n-butyl, isobutyl, sec-butyl or t-butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate, 2-(hydroxyphenylcarbonyloxy)ethyl methacrylate and the like.

Specific examples of the acrylamide include acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide, N-hydroxyethyl-N-methylacrylamide and the like.

Specific examples of the methacrylamide include methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethaerylamide, N-methyl-N-phenylmethacrylamide, N-hydroxyethyl-N-methylmethacrylamide and the like.

Specific examples of the vinyl ester include vinyl acetate, vinyl butyrate, vinyl benzoate and the like.
Specific examples of the styrene include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrelle, dimethoxystyrene, chlorostyrene, dichlorostyrene, bromostyrene, iodostyrene, fluorostyrene, carboxystyrene and the like.

With respect to a proportion of such other monomer to be used for the synthesis of a copolymer, a sufficient amount for improving various physical properties is necessary. However, in order that the function as the hydrophilic film may be sufficient and that advantages to be brought by adding the specific hydrophilic polymer (B) may be sufficiently obtained, it is preferable that the proportion is not excessively high. Accordingly, a total proportion of other monomer in the specific hydrophilic polymer (B) is preferably not more than 80 % by mass, and more preferably not more than 50 % by mass.

From the viewpoints of curing properties and hydrophilicity, the specific hydrophilic polymer (B) according to the invention is preferably contained in an amount in the range of from 5 to 95 % by mass, more preferably from 15 to 90 % by mass, and most preferably from 20 to 85 % by mass relative to a nonvolatile component of the hydrophilic film forming composition of the invention. The specified hydrophilic polymer (B) may be used singly or in combinations of two or more kinds thereof. The "nonvolatile component" as referred to herein means a component from which a volatile solvent has been eliminated.

In the hydrophilic film forming composition of the invention, it is preferable from the viewpoints of adhesion and antifouling properties to mix a hydrophilic polymer having a hydrolyzable silyl group in a polymer terminal and a hydrophilic polymer having a hydrolyzable silyl group in a polymer side chain. The hydrophilic polymer having a hydrolyzable silyl group in a polymer terminal can be represented by the foregoing general formula (2), and the hydrophilic polymer having a hydrolyzable silyl group in a polymer side chain can be represented by the foregoing general formula (3).
In general, when the hydrophilic polymer having a hydrolyzable silyl group in a polymer terminal is mixed with the hydrophilic polymer having a hydrolyzable silyl group in a polymer side chain, a possibility of a lowering in adhesion and water resistance may be considered. However, in the invention, when a ratio of the hydrophilic polymer having a hydrolyzable silyl group in a polymer terminal to the hydrophilic polymer having a hydrolyzable silyl group in a polymer side chain in the hydrophilic composition is made to fall within a specified range as described previously, an unexpected effect that the adhesion and antifouling properties can be enhanced while keeping the hydrophilicity is obtained.
The ratio of the hydrophilic polymer having a hydrolyzable silyl group in a polymer terminal to the hydrophilic polymer having a hydrolyzable silyl group in a polymer side chain is preferably in the range of from 50/50 to 5/95, and more preferably in the range of from 40/60 to 10/90.

### [(C) Metal complex catalyst]

The metal complex catalyst (C) which can be used in the invention is preferably constituted of a metal element selected among the Groups 2A, 3B, 4A and 5A of the periodic table and an oxo or hydroxy compound selected among β-diketones, keto esters, hydroxycarboxylic acids or esters thereof, amino alcohols and enolic active hydrogen compounds.

Furthermore, of the constitutional metal elements, elements of the Group 2A, for example, Mg, Ca, Sr, Ba and the like; elements of the Group 3B, for example, Al, Ga and the like; elements of the Group 4A, for example, Ti, Zr and the like; and elements of the Group 5A, for example, V, Nb, Ta and the like are preferable, and each of them forms a complex having an excellent catalytic effect. Above all, complexes obtained from Zr, Al or Ti are excellent and preferable.

In the invention, examples of the oxo or hydroxy oxygen-containing compound which constitutes a ligand of the foregoing metal complex include β-diketones, for example, acetylacetone (2,4-pentanedione), 2,4-heptanedione and the like; keto esters, for example, methyl acetoacetate, ethyl acetoacetate, butyl acetoacetate and the like; hydroxycarboxylic acids and esters thereof, for example, lactic acid, methyl lactate, salicylic acid, ethyl salicylate, phenyl salicylate, malic acid, tartaric acid, methyl tartarate and the like; keto alcohols, for example, 4-hydroxy-4-methyl-2-pentanone, 4-hydroxy-2-pentanone, 4-hydroxy-4-methyl-2-pentanone, 4-hydroxy-2-heptanone and the like; amino alcohols, for example, monoethanolamine, N,N-dimethylethanolamine, N-methyl-monoethanolamine, diethanolamine, triethanolamine and the like; enolic active compounds, for example, methylolmelamine, methylolurea, methylolacrylamide, diethyl malonate and the like; and compounds having a substituent on the methyl group, methylene group or carbonyl carbon of acetylacetone (2,4-pentanedione).

The ligand is preferably an acetylacetone derivative. In the invention, the acetylacetone derivative refers to a compound having a substituent on the methyl group, methylene group or carbonyl carbon of acetylacetone. Examples of the substituent which is substituted on the methyl group of acetylacetone include a linear or branched alkyl group, a linear or branched acyl group, a linear or branched hydroxyalkyl group, a linear or branched carboxyalkyl group, a linear or branched alkoxy group and a linear or branched alkoxyalkyl group each having from 1 to 3 carbon atoms; examples of the substituent which is substituted on the methylene group of acetylacetone include a linear or branched carboxyalkyl group and a linear or branched hydroxyalkyl group each having from 1 to 3 carbon atoms as well as a carboxyl group; and examples of the substituent which is substituted on the carbonyl carbon of acetylacetone include an alkyl group having from 1 to 3 carbon atoms, and in that case, a hydrogen atom is added to the carbonyl oxygen to form a hydroxyl group.

Preferred specific examples of the acetylacetone derivative include ethylcarbanylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone and diacetone alcohol. Of these, acetylacetone and diacetylacetone are especially preferable. The complex of the foregoing acetylacetone derivative with the foregoing metal element is a mononuclear complex in which from 1 to 4 acetylacetone derivative molecules are coordinated per metal element. When the coordination number of the metal element is greater than the total coordination number of the acetylacetone derivative, ligands commonly used in usual complexes such as a water molecule, a halogen ion, a nitro group, an ammonio group and the like may be coordinated on the metal element.

Preferred examples of the metal complex include a tris(acetylacetonato)aluminum complex salt, a di(acetylacetonato)aluminum aquocomplex, a mono(acetylacctonato)aluminum chlorocomplex salt, a di(diacetylacetonato)aluminum complex salt, ethylacetoacetate aluminum diisopropylate, aluminum tris(ethylacetoacetate), cyclic aluminum oxide isopropylate, a tris(acetylacetonato)barium complex salt, a di(acetylacetonato)titanium complex salt, a tris(acetylacetonato)titanium complex salt, a di-i-propoxy bis(acetylacetonato)titanium complex salt, zirconium tris(ethylacetoacetate), a zirconium tris(benzoic acid) complex salt and the like. These metal complexes exhibit excellent stability in an aqueous coating solution and are excellent in an effect for accelerating the gelation in a sol-gel reaction at the time of heat drying. Above all, ethylacetoacetate aluminum diisopropylate, aluminum tris(ethylacetoacetate), a di(acetylacetonato)titanium complex salt and zirconium tris(ethylacetoacetate) are especially preferable.

In this specification, the description of a counter salt of the foregoing metal complex is omitted. However, the kind of the counter salt is arbitrary so far as it is a water-soluble salt which keeps the electric charge as a complex compound neutral. Salts which can be stoichiometrically kept neutral, for example, nitrates, halogenic acid salts, sulfates, phosphates and the like, are useful:
The behavior of a silica sol-gel reaction of the metal complex is described in detail in J. Sol-Gel. Sci, and Tec., 16, 209 (1999). As its reaction mechanism, the following scheme may be presumed. That is, it may be considered that the metal complex takes a coordination structure and is stable in a coating solution and in a dehydration condensation reaction starting with a heating and drying step after coating, accelerates crosslinking according to a mechanism similar to an acid catalyst. In any event, the use of this metal complex made it possible to improve the stability with time of the coating solution and the surface quality of the film and to attain high hydrophilicity and high durability.

The metal complex catalyst (C) according to the invention is preferably used in an amount in the range of from 0 to 50 % by mass, and more preferably from 5 to 25 % by mass in terms of a nonvolatile component in the hydrophilic film forming composition of the invention. Also, the metal complex catalyst (C) may be used singly or in combinations of two or more kinds thereof.

In addition to the foregoing specified compound (A), specified hydrophilic polymer (B) and metal complex catalyst (C) as essential components, various compounds can be used jointly in the hydrophilic film forming composition of the invention depending upon the purpose so far as the effects of the invention are not impaired. The components which can be used jointly are hereunder described.

### [(D) Alkoxide compound of an element selected among Si, Ti, Al and Zr]

The alkoxide compound of an element selected among Si, Ti, Zr and Al as the specified alkoxide (D) which is used in the invention is a hydrolyzable, polymerizable compound having a polymerizable functional group in a structure thereof and functioning as a crosslinking agent, and when polycondensed with the specified hydrophilic polymer (B), a firm film having a crosslinking structure is formed, and therefore, it is preferably used.

Furthermore, the specified alkoxide (D) is preferably a compound represented by the following general formula (7), and in order to cure the hydrophilic film, in forming a crosslinking structure, the foregoing specified hydrophilic polymer (B) and the specified alkoxide (D) are mixed, and the mixture is coated on the surface of a support, heated and then dried.

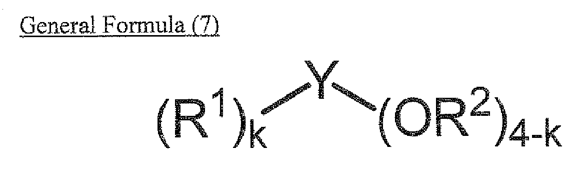

In the general formula (7), R¹ represents a hydrogen atom, an alkyl group or an aryl group; R² represents an alkyl group or an aryl group; Y represents Si, Al, Ti or Zr; and k represents an integer of from 0 to 2. In the case where each of R¹ and R² represents an alkyl group, the carbon atom number is preferably from 1 to 4. The alkyl group or the aryl group may have a substituent, and examples of the substituent which can be introduced include a halogen atom, an amino group, a mercapto group and the like. This compound is a low-molecular compound and preferably has a molecular weight of not more than 1,000.

Specific examples of the specified alkoxide (D) represented by the general formula (7) are given below, but it should not be construed that the invention is limited thereto. In the case where Y represents Si, namely silicon is contained in the specified alkoxide, examples thereof include trimethoxysilane, triethoxysilane, tripropoxysilane, tetramethoxysilane, tetraethoxysilane, tetrapropoxysilane, methyltrimethoxysilane, ethyltrimethoxysilane, propyltrimethoxysilane, methyltriethoxysilane, ethyltriethoxysilane, propyltriethoxysilane, dimethyldimethoxysilane, diethyldiethoxysilane, γ-chloropropyltriethoxysilane, γ-mercaptopropyltrimethoxysilane, γ-mercaptopropyltriethoxysilane, γ-aminopropyltriethoxysilane, phenyltrimethoxysilane, phenyltriethoxysilane, phenyltripropoxysilane, diphenyldimethoxysilane, diphenyldiethoxysilane and the like. Of these, tetramethoxysilane, tetraethoxysilane, methyltrimethoxysilane, ethyltrimethoxysilane, methyltriethoxysilane, ethyltriethoxysilane, dimethyldiethoxysilane, phenyltrimethoxysilane, phenyltriethoxysilane, diphenyldimethoxysilane, diphenyldiethoxysilane and the like are especially preferable.

In the case where Y represents Al, namely aluminum is contained therein, examples thereof include trimethoxy aluminate, triethoxy aluminate, tripropoxy aluminate, tetraethoxy aluminate and the like.
In the case where Y represents Ti, namely titanium is contained therein, examples thereof include trimethoxy titanate, tetraethoxy titanate, triethoxy titanate, tetraethoxy titanate, tetrapropoxy titanate, chlorotrimethoxy titanate, chlorotriethoxy titanate, ethyltrimeihoxy titanate, methyltriethoxy titanate, ethyltriethoxy titanate, diethyldiethoxy titanate, phenyltrimethoxy titanate, phenyltriethoxy titanate and the like.
In the case where Y represents Zr, namely zirconium is contained therein, examples thereof include zirconates corresponding to the above-exemplified titanium-containing compounds.
Of these, alkoxides wherein Y represents Si are preferable from the viewpoint of film properties.

The specified alkoxide (D) according to the invention may be used singly or in combinations of two or more kinds thereof.
The specified alkoxide (D) is preferably used in an amount in the range of from 5 to 80 % by mass, and more preferably from 10 to 70 % by mass in terms of a nonvolatile component in the hydrophilic film forming composition of the invention. The specified alkoxide is easily available as a commercial product and is also obtainable by a known synthesis method, for example, a reaction between each metal chloride and an alcohol.

### [(E) Surfactant]

In the invention, in order to enhance film surface properties of the foregoing hydrophilic film forming composition, it is preferable to use a surfactant. Examples of the surfactant include a nonionic surfactant, an anionic surfactant, a cationic surfactant, an ampholytic surfactant, a fluorocarbon based surfactant and the like. The "surfactant" as referred to in the invention refers to one having a value of Log P, as a partition coefficient in water and octanol, of more than 2 (exclusive of 2).

The nonionic surfactant which is used in the invention is not particularly limited, and those which are conventionally known can be used. Examples thereof include polyoxyethylene alkyl ethers, polyoxyethylene alkylphenyl ethers, polyoxyethylene polystyrylphenyl ethers, polyoxyethylene polyoxypropylene alkyl ethers, glycerin fatty acid partial esters, sorbitan fatty acid partial esters, pentaerythritol fatty acid partial esters, propylene glycol mono-fatty acid esters, sucrose fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylenated castor oils, polyoxyethylene glycerin fatty acid partial esters, fatty acid diethanolamides, N,N-bis-2-hydroxyalkylamines, polyoxyethylene alkylamines, triethanolamine fatty acid esters, trialkylamine oxides, polyethylene glycol and a copolymer of polyethylene glycol and polypropylene glycol.

The anionic surfactant which is used in the invention is not particularly limited, and those which are conventionally known can be used. Examples thereof include fatty acid salts, abietic acid salts, hydroxyalkanesulfonic acid salts, alkanesulfonic acid salts, dialkylsulfosuccinic acid esters, linear alkylbenzenesulfonic acid salts, branched alkylbenzenesulfonic acid salts, alkylnaphthalenesulfonic acid salts, alkylphenoxypolyoxyethylene propylsulfonic acid salts, polyoxyethylene alkylsulfophenyl ether salts, an N-methyl-N-oleyltaurin sodium salt, an N-alkylsulfosuccinic acid monoamide disodium salt, petroleum sulfonic acid salts, sulfated beef tallow oil, sulfuric ester salts of a fatty acid alkyl ester, alkylsulfuric ester salts, polyoxyethylene alkyl ether sulfuric ester salts, fatty acid monoglyceride sulfuric ester salts, polyoxyethylene alkylphenyl ether sulfuric ester salts, polyoxyethylene styrylphenyl ether sulfuric ester salts, alkylphosphoric ester salts, polyoxyethylene alkyl ether phosphoric ester salts, polyoxyethylene alkylphenyl ether phosphoric ester salts, a partially saponified product of a styrene/maleic anhydride copolymer, a partially saponified product of an olefin/maleic anhydride copolymer, naphthalenesulfonic acid salt formalin condensates and the like.

The cationic surfactant which is used in the invention is not particularly limited, and those which are conventionally known can be used. Examples thereof include alkylamine salts, quaternary ammonium salts, polyoxyethylene alkylamine salts and polyethylene polyamine derivatives.
The ampholytic surfactant which is used in the invention is not particularly limited, and those which are conventionally known can be used. Examples thereof include carboxybetaines, aminocarboxylic acids, sulfobetaines, aminosulfuric esters and imidazolines,
In the foregoing surfactants, the "polyoxyethylene" can also be given a different reading as "polyoxyalkylene", for example, polyoxymethylene, polyoxypropylene, polyoxybutylene and the like. In the invention, those surfactants can also be used.

Furthermore, examples of the preferred surfactant include fluorine based surfactants containing a perfluoroalkyl group in a molecule thereof. Examples of such a fluorocarbon based surfactant include anionic types, for example, perfluoroalkylcarboxylic acid salts, perfluoroalkylsulfonic acid salts, perfluoroalkylphosphoric esters and the like; ampholytic types, for example, perfluoroalkylbetaines and the like; cationic types, for example, perfluoroalkyltrimethylammonium salts and the like; and nonionic types, for example, perfluoroalkylamine oxides, perfluoroalkyl ethylene oxide adducts, oligomers containing a perfluoroalkyl group and a hydrophilic group, oligomers containing a perfluoroalkyl group and a lipophilic group, oligomers containing a perfluoroalkyl group, a hydrophilic group and a lipophilic group, urethanes containing a perfluoroalkyl group and a lipophilic group and the like. Also, fluorocarbon based surfactants disclosed in JP-A-62-170950, JP-A-62-226143 and JP-A-60-168144 can be suitably exemplified.

The surfactant is preferably used in an amount in the range of from 0.001 to 10 % by mass, and more preferably from 0.01 to 5 % by mass in terms of a nonvolatile component in the hydrophilic film forming composition of the invention. Also, the surfactant can be used singly or in combinations of two or more kinds thereof.

### [(F) Inorganic fine particle]

The hydrophilic film forming composition of the invention may contain an inorganic fine particle for the purposes of enhancing the cured film strength and hydrophilicity of the hydrophilic film to be formed. Examples of the inorganic fine particle which is suitably used include silica, alumina, magnesium oxide, titanium oxide, magnesium carbonate, calcium alginate and mixtures thereof.
The inorganic fine particle preferably has an average particle size of from 5 nm to 10 µm, and more preferably from 0.5 to 3 µm. When the particle size of the inorganic fine particle falls within the foregoing range, it is possible to form a film with excellent hydrophilicity in which the inorganic fine particle is stably dispersed in the hydrophilic layer, and the film strength of the hydrophilic layer is sufficiently kept. The foregoing inorganic fine particle is preferably colloidal silica, and this is easily available as a commercial product such as a colloidal silica dispersion and the like.

The inorganic fine particle according to the invention is preferably used in an amount in the range of not more than 20 % by mass, and more preferably not more than 10 % by mass in terms of a nonvolatile component in the hydrophilic film forming composition of the invention. Also, the inorganic fine particle can be used singly or in combinations of two or more kinds thereof.

### [(G) Ultraviolet ray absorber]

In the invention, an ultraviolet ray absorber can be used from the viewpoints of an enhancement of the weather resistance and an enhancement of the durability of the hydrophilic member.
Examples of the ultraviolet ray absorber include benzotriazole based compounds disclosed in JP-A-58-185677, JP-A-61-190537, JP-A-2-782, JP-A-5-197075, JP-A-9-34057, etc.; benzophenone based compounds disclosed in JP-A-46-2784, JP-A-5-194483, U.S. Patent No. 3,214,463, etc.; cinnamic acid based compounds disclosed in JP-B-48-30492, JP-B-56-21141, JP-A-14-88106, etc.; triazine based compounds disclosed in JP-A-4-298503, JP-A-8-53427, JP-A-8-239368, JP-A-10-182621, JP-T-8-501291, etc.; compounds disclosed in *Research Disclosure,* No. 24239; compounds capable of absorbing ultraviolet rays to emit fluorescence, as represented by stilbene based compounds and benzoxazole based compounds; so-called fluorescent brighteners; and the like.

The addition amount thereof is properly chosen depending upon the purpose, and in general, it is preferably from 0.5 to 15% by mass in terms of a solids content.

### [(H) Antioxidant]

For the purpose of enhancing the stability of the hydrophilic member of the invention, an antioxidant can be added in the coating solution for forming a hydrophilic layer. Examples of the antioxidant include those disclosed in EP-A-223739, EP-A-309401, EP-A-309402, EP-A-310551, EP-A-310552, EP-A-459415, DE-A-3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, U.S. Patents Nos. 4,814,262 and 4,980,275, etc.

The addition amount thereof is properly chosen depending upon the purpose and is preferably from 0.1 to 8% by mass in terms of a solids content.

### [(I) Polymer compound]

For the purpose of adjusting film physical properties of the hydrophilic layer, various polymer compounds can be added in the coating solution for forming a hydrophilic layer of the hydrophilic member of the invention within the range where the hydrophilicity is not impaired. Examples of the polymer compound which can be used include acrylic polymers, polyvinyl alcohol resins, polyvinyl butyral resins, polyurethane resins, polyamide resins, polyester resins, epoxy resins, phenol resins, polycarbonate resins, polyvinyl formal resins, shellac, vinyl based resins, acrylic resins, rubber based resins, waxes, other natural resins and the like. Such a polymer compound may be used in combinations with two or more kinds thereof. Of these, vinyl based copolymers obtained through copolymerization with an acrylic monomer are preferable. Furthermore, with respect to the copolymerization composition of a polymer binder, copolymers containing, as a structural unit, a "carboxyl group-containing monomer", an "allyl methacrylate" or an "allyl acrylate" are also preferably used.

### [(J) Other additives]

In addition to the foregoing, for example, a leveling additive, a matting agent, a wax for adjusting film physical properties and a tackifier for improving adhesion to the substrate within the range where the hydrophilicity is not impaired can be contained as the need arises.
Specific examples of the tackifier include high-molecular weight adhesive polymers disclosed on pages 5 to 6 of JP-A-2001-49200 (for example, copolymers made of an ester of (meth)acrylic acid and an alcohol having an alkyl group having from 1 to 20 carbon atoms, an ester of (meth)acrylic acid and an alicyclic alcohol having from 3 to 14 carbon atoms and an ester of (meth) acrylic acid and an aromatic alcohol having from 6 to 14 carbon atoms); low-molecular weight tackiness-imparting resins having a polymerizable unsaturated bond; and the like.

### [Preparation of hydrophilic film forming composition]

The preparation of the hydrophilic film forming composition can be carried out by dissolving the specified hydrophilic polymer (A), the specified hydrophilic polymer (B) and the metal complex catalyst (C) and further, preferably any one of the various additives (D) to (J) (two or more kinds thereof may be contained) in a solvent such as ethanol and the like and stirring the solution. The reaction temperature is preferably from room temperature to 80°C; the reaction time, namely a time for continuing stirring, is preferably in the range of from 1 to 72 hours; and by advancing the hydrolysis and polycondensation of the silane coupling group by this stirring, an organic/inorganic composite sol liquid can be obtained.

The solvent which is used in preparing the foregoing hydrophilic film forming composition containing the specified hydrophilic polymer (A), the specified hydrophilic polymer (B) and the metal complex catalyst (C) is not particularly limited so far as it is able to uniformly dissolve and disperse these components therein. The solvent is preferably an aqueous solvent, for example, methanol, ethanol, water and the like is preferable. As a method for forming the hydrophilic member, known methods such as coating methods, for example, a dip coating method, a spin coating method, a flow coating method, a spray coating method, a roll coating method, a gravure coating method and the like; and vapor phase methods including a physical vapor deposition (PVD) method and a chemical vapor deposition (CVD) method, for example, a vacuum vapor deposition method, a reactive vapor deposition method, an ion beam assist method, a sputtering method, an ion plating method and the like.

As described previously, the preparation of the organic/inorganic composite sol liquid (hydrophilic film forming composition) for forming a hydrophilic film from the hydrophilic film forming composition of the invention utilizes a so-gel method. The sol-gel method is described in detail in Sumio SAKUHANA, Sol-Gel-Ho No Kagaku (Science of Sol-Gel Process), published by Agune Shofu Sha (1988); Ken HIRASHIMA, Saishin Sol-Gel-Ho Niyoru Kinosei Hakumaku Sakusei Gijutsu (Functional Thin Film Formation Technology according to Newest Sol-Gel Method), published by General Technology Center (1992); and the like. In the invention, the methods as described in these documents can be applied to the preparation of the hydrophilic film forming composition.

The hydrophilic member of the invention can be obtained by coating a solution containing such a hydrophilic film forming composition of the invention on an adequate support, followed by drying. That is, the hydrophilic member of the invention has a hydrophilic film (hydrophilic layer) formed by coating the foregoing hydrophilic film forming composition of the invention on a support, followed by heating and drying. In the formation of the hydrophilic film, with respect to the heating and drying condition after coating a solution containing the hydrophilic film forming composition, from the viewpoint of efficiently forming a high-density crosslinking structure, drying is preferably performed at a temperature in the range of from 50 to 200 °C for from about 2 minutes to one hour, and more preferably at a temperature in the range of from 80 to 160 °C for from 5 to 30 minutes. Also, as a heating measure, a known measure, for example, use of a dryer having a temperature-adjusting function or the like is preferably employed.

### [Substrate]

As the substrate which can be used as the support of the hydrophilic member of the invention, for example, in the case of a transparent substrate in which an antifouling and/or anti-fogging effect is expected, so far as the material quality is concerned, a substrate through which visible light can transmit, for example, an inorganic substrate such as a glass, an undercoat layer-containing glass, etc.; a transparent plastic; an undercoat layer-containing transparent plastic layer; and the like can be suitably utilized.
Also, mentals, in particular stainless steel or aluminum, ceramics, concretes, fibers, papers, leathers, combinations thereof and stacks thereof can be suitably utilized. Of these, glass substrates, plastic substrates and aluminum substrates are especially preferable as the substrate.

So far as details of the inorganic substrate are concerned, there can be exemplified usual glass plates, stacked glass plates containing a resin layer, a gas layer, a vacuum layer, etc. and various glass plates containing a reinforcing component, a coloring agent, etc.
Examples of the undercoat layer-containing glass plate include glass plates provided with an undercoat layer formed of a metal oxide, for example, silicon oxide, aluminum oxide, magnesium oxide, titanium oxide, tin oxide, zirconium oxide, sodium oxide, antimony oxide, indium oxide, bismuth oxide, yttrium oxide, cerium oxide, zinc oxide, ITO (indium tin oxide), etc.; a metal halide, for example, magnesium fluoride, calcium fluoride, lanthanum fluoride, cerium fluoride, lithium fluoride, thorium fluoride, etc.; or the like.

The undercoat layer can be configured of a single layer or multiple layers between the substrate and the hydrophilic layer. The inorganic compound layer is also able to maintain the light transmittance depending upon its thickness. Also, the inorganic compound layer can be made to act as an antireflection layer. Examples of a method for forming the inorganic compound layer which can be applied include known methods such as coating methods, for example, a dip coating method, a spin coating method, a flow coating method, a spray coating method, a roll coating method, a gravure coating method, etc.; vapor phase methods including a physical vapor deposition (PVD) method and a chemical vapor deposition (CVD) method, for example, a vacuum vapor deposition method, a reactive vapor deposition method, an ion beam assist method, a sputtering method, an ion plating method, etc.; and the like. The undercoat layer is preferably one obtained by hydrolyzing and polycondensing a composition containing at least an alkoxide compound containing an element selected among Si, Ti, Zr and Al and a nonvolatile catalyst. Here, examples of the alkoxide containing an element selected among Si, Ti, Zr and Al include those as described previously. Of these, an alkoxide compound of Si is preferable in view of reactivity and easiness of availability, and specifically, the compound which is used for the silane coupling agent can be suitably used.

The nonvolatile catalyst which is used for the undercoat layer is one other than those having a boiling point of lower than 20°C. In other words, the nonvolatile catalyst includes those having a boiling point of 20 °C or higher, those which do not originally have a boiling point and the like.
The nonvolatile catalyst which is used in the invention is not particularly limited, and examples thereof include metal complexes (also called "metal chelate compounds") and silane coupling agents. Besides, though acids or alkalis are suitably used as the catalyst in the art, these can be applied without particular limitations so far as they have a boiling point of 20°C or higher. For example, though hydrochloric acid having a boiling point of -83°C and the like are excluded, nitric acid having a boiling point of 121 °C, phosphoric acid having a decomposition temperature of 213 °C and the like are applicable as the nonvolatile catalyst. Examples of the metal complex include those as described previously.

The silane coupling agent which is used as the nonvolatile catalyst is not particularly limited, and examples thereof include those having a functional group exhibiting acidity or alkalinity. In more detail, examples thereof include silane coupling agents having a functional group exhibiting acidity, for example, peroxo acids, carboxylic acids, carbohydrazonic acids, carboximidic acids, sulfonic acids, sulfinic acids, sulfenic acids, selenonic acids, seleninic acids, selenenic acids, telluronic acids and the foregoing alkali metal salts, etc.; and silane coupling agents having a functional group exhibiting basicity such as an amino group, etc.

The undercoat layer can be formed through hydrolysis and polycondensation of a composition containing at least the foregoing alkoxide compound and nonvolatile catalyst by coating the composition on a base material, followed by heating and drying. The heating temperature and heating time for forming an undercoat layer are not particularly limited so far as the solvent in the sol liquid can be removed, and a firm film can be formed. In view of manufacture adaptability and the like, the heating temperature is preferably not higher than 150°C, and the heating time is preferably within one hour. The undercoat layer can be prepared by a known coating method without particular limitations. Examples of the coating method which can be applied include a spray coating method, a dip coating method, a flow coating method, a spin coating method, a roll coating method, a film applicator method, a screen printing method, a bar coater method, painting with a brush, painting with a sponge and the like.

As to the thus obtained undercoat layer, in the case where the nonvolatile catalyst is contained and exists therein without losing its activity, and in particular, when it is made to exist on the surface, too, the adhesion at an interface between the instant undercoat layer and the hydrophilic layer becomes extremely high.

Also, as to the undercoat layer, by providing fine irregularities by plasma etching or incorporation of a metal particle, it is possible to more enhance the adhesion at an interface between the instant undercoat layer and the hydrophilic layer.

As a raw material of the undercoat layer, hydrophilic resins and water-dispersible latexes can be used.
Examples of the hydrophilic resin include polyvinyl alcohol (PVA), cellulose based resins [for example, methyl cellulose (MC), hydroxyethyl cellulose (HEC), carboxymethyl cellulose (CMC), etc.], chitins, chitosans, starch, ether linkage-containing resins [for example, polyethylene oxide (PEO), polyethylene glycol (PEG), polyvinyl ether (PVE), etc.], carbamoyl group-containing resins [for example, polyacrylamide (PAAM), polyvinylpyrrolidone (PVP), etc.] and the like. Also, carboxyl group-containing polyacrylic acid salts, maleic acid resins, alginic acid salts, gelatins and the like can be exemplified.
Of the foregoing, at least one kind selected among polyvinyl alcohol based resins, cellulose based resins, ether linkage-containing resins, carbamoyl group-containing resins, carboxyl group-containing resins and gelatins is preferable, with polyvinyl alcohol (PVA) based resins and gelatins being especially preferable.

Examples of the water-dispersible latex include acrylic latexes, polyester based latexes, NBR resins, polyurethane based latexes, polyvinyl acetate based latexes, SBR resins, polyamide based latexes and the like. Of these, acrylic latexes are preferable.
Each of the foregoing hydrophilic resins and water-dispersible latexes may be used singly or in combinations of two or more kinds thereof. The hydrophilic resin and the water-dispersible latex may be used in combinations.
Also, a crosslinking agent capable of crosslinking the foregoing hydrophilic resin or water-dispersible latex may be used.
As the crosslinking agent which can be applied in the invention, a known crosslinking agent capable of forming crosslinking by heat can be used. Examples of general thermal crosslinking agents include those as described in Crosslinking Agent Handbook, written by Shinzo YAMASHITA and Tosuke KANEKO and published by Taiseisha Ltd. (1981). The crosslinking agent which is used in the invention is not particularly limited so far as it has two or more functional groups and is effectively crosslinkable with the hydrophilic resin or water-dispersible latex. Specific examples of the thermal crosslinking agent include polycarboxylic acids, for example, polyacrylic acid, etc.; amine compounds, for example, polyethyleneimine, etc.; polyepoxy compounds, for example, ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether, 1,6-hexanediol diglycidyl ether, trimethylolpropane triglycidyl ether, sorbitol polyglycidyl ether, etc.; polyaldehyde compounds, for example, glyoxal, terephthalaldehyde, etc.; polyisocyanate compounds, for example, tolylene diisocyanate, hexamethylene diisocyanate, diphenylmethane isocyanate, xylylene diisocyanate, polymethylene polyphenyl isocyanate, cyclohexyl diisocyanate, cyclohexane phenylene diisocyanate, naphthalcnc-1,5-diisocyanate, isopropylbenzene-2,4-diisocyanate, a polypropylene glycol/tolylene diiosyanate addition reactant, etc.; block polyisocyanate compounds; silane coupling agents, for example, tetraalkoxysilanes, etc.; metal crosslinking agents, for example, acetyl acetonates of aluminum, copper or iron (III), etc.; polymethylol compounds, for example, trimethylolmelamine, pentaerythritol, etc.; and the like. Of these thermal crosslinking agents, water-soluble crosslinking agents are preferable from the viewpoints of easiness of the preparation of a coating solution and prevention of a reduction of the hydrophilicity of the prepared hydrophilic layer.
The total amount of the foregoing hydrophilic resin and/or water-dispersible latex in the undercoat layer is preferably from 0.01 to 20 g/m², and more preferably from 0.1 to 10 g/m².

### [Layer configuration at the time of use of hydrophilic member]

When the hydrophilic member of the invention is used while expecting revelation of an antifogging, abrasion-resistant, antibacterial or antifouling effect, it can be used upon proper addition of another layer depending upon the purpose, form or use place. The layer configuration which is added as the need arises is hereunder described.

1) Bonding layer:
   When the hydrophilic member of the invention is stuck on another base material and used, an adhesive which is a pressure-sensitive adhesive is preferably used as a bonding layer on the back surface of the base material. As the adhesive, adhesives which are generally used for an adhesive sheet, for example, rubber based adhesives, acrylic adhesives, silicone based adhesives, vinyl ether based adhesives, styrene based adhesives and the like can be used.
   When optical transparency is required, adhesives useful for an optical application are chosen. When coloration, semi-transparency or a pattern with a mat tone is required, it is possible to bring the effect by adding a dye or an organic or inorganic fine particle to the adhesive in addition to patterning on the base material.
   In the case where a tackifier is required, a resin, for example, tackiness-imparting resins, for example, rosin based resins, terpene based resins, petroleum resins, styrene based resins and hydrogenation products thereof and the like can be used singly or in admixture.
   The adhesive strength of the adhesive which is used in the invention is of generally called strong adhesion and is 200 g/25 mm or more, preferably 300 g/25 mm or more, and more preferably 400 g/25 mm or more. The "adhesive strength" as referred to herein is a value as measured by a 180-degree peeling test according to JIS Z0237.

2) Release layer:
In the case where the hydrophilic member of the invention has the foregoing bonding layer, a release layer can be further added. In order to bring release properties, it is preferable that a release agent is contained in the release layer. As the release agent, in general, silicone based release agents composed of a polyorganosiloxane, fluorocarbon based compounds, long-chain alkyl-modified products of polyvinyl alcohol, long-chain alkyl-modified products of polyethyleneimine and the like can be used. Also, various release agents, for example, hot melt type release agents, monomer type release agents capable of curing a releasable monomer by means of radical polymerization, cationic polymerization, polycondensation reaction, etc. and the like, and besides, copolymer based resins, for example, acryl-silicone based copolymer resins, acryl-fluorocarbon based copolymer resins, urethane-silicone-fluorocarbon based copolymer resins and the like, resin blends of a silicone based resin and an acrylic resin and resin blends of a fluorocarbon based resin and an acrylic resin are useful. Also, a hard coat release layer obtained by curing a curable composition containing any one of a fluorine atom and/or a silicon atom and an active energy ray-polymerizable group-containing compound may be formed.

### 3) Other layers:

A passivation layer may be provided on the hydrophilic layer. The passivation layer has a function for preventing injuring on the hydrophilic surface at the time of handling, shipment or storage or the like or a reduction of the hydrophilicity to be caused due to the adhesion of a staining substance. As the passivation layer, the hydrophilic polymer layer used in the foregoing release layer or undercoat layer can be used. The passivation layer is peeled away after sticking the hydrophilic member onto an adequate base material.

### [Form of structure]

The structure having the hydrophilic layer of the invention may be fed in a form of a sheet shape, a roll shape or a ribbon shape. For the purpose of sticking onto an adequate base material, the structure may be fed in a form in which it is previously cut.

### [Surface free energy]

The degree of hydrophilicity of the hydrophilic layer surface is in general measured in terms of a waterdrop contact angle. However, with respect to the surface with very high hydrophilicity as in the invention, there is a possibility that the waterdrop contact angle is not more than 10 degrees, and even not more than 5 degrees. Thus, in mutually comparing the degree of hydrophilicity, there is a limit. On the other hand, examples of a method for evaluating the degree of hydrophilicity on the solid surface in detail include a measurement of surface free energy. There are proposed various methods. In the invention, however, the surface free energy was measured by employing the Zisman plot method as an example. Specifically, the Zisman plot method is a measurement method in which by utilizing the properties that in an aqueous solution of an inorganic electrolyte, for example, magnesium chloride, etc., its surface tension becomes large with an increase of the concentration thereof, a contact angle is measured in air under a room temperature condition by using the aqueous solution; a surface tension of the aqueous solution is taken on the abscissa, whereas a value obtained by reducing the contact angle into cos θ is taken on the ordinate; points of the aqueous solution of various concentrations are plotted to obtain a linear relationship; and the surface tension at cos θ = 1, namely at a contact angle = 0° is defined as surface free energy of the solid. The surface tension of water is 72 mN/m, and it may be said that the larger the value of surface free energy, the higher the hydrophilicity is.
The hydrophilic layer in which the surface free energy as measured in such a method is in the range of from 70 mN/m to 95 mN/m, preferably from 72 mN/m to 93 mN/m, and more preferably from 75 mN/m to 90 mN/m is excellent in hydrophilicity and exhibits a favorable performance.

In the case where the hydraphilic member having a hydrophilic film provided thereon according to the invention is applied (used and stuck) for a windowpane or the like, the transparency is important from the viewpoint of securing the visibility. The hydrophilic film of the invention is excellent in transparency, and even when the film thickness is thick, it is possible to make it compatible with durability without impairing the degree of transparency. The thickness of the hydrophilic film of the invention is preferably from 0.01 µm to 100 µm, more preferably from 0.05 µm to 50 µm, and most preferably from 0.1 µm to 20 µm. What the film thickness is 0.01 µm or more is preferable because sufficient hydrophilicity and durability are obtained; and what the film thickness is not more than 100 µm is also preferable because a problem in fabrication properties such as the generation of a crack and the like is not caused.
The transparency is evaluated by measuring a light transmittance in a visible light region (from 400 nm to 800 nm) by a spectrophotometer. The light transmittance is preferably in the range of from 100 % to 70 %, more preferably from 95 % to 75 %, and most preferably from 95 % to 80 %. When the light transmittance falls within this range, the hydrophilic member having a hydrophilic film provided thereon can be applied to various applications without disturbing the visibility.

Also, among organic substrates such as plastics and the like, examples of the transparent plastic substrate include substrates made of a plastic material of every sort having visible light transmittance. In particular, the substrate which is used as an optical member is chosen while taking into consideration optical characteristics such as transparency, refractive index, dispersibility and the like and also chosen while taking into consideration various physical properties, for examples, physical characteristics inclusive of strengths such as impact resistance, flexibility and the like, heat resistance, weather resistance, durability and the like depending upon the use purpose. From these viewpoints, preferred examples of the plastic substrate include polyolefin based resins such as polyethylene, polypropylene and the like; polyester based resins such as polyethylene terephthalate, polyethylene naphthalate and the like; polyamide based resins; polystyrene; polyvinyl chloride; polyimides; polyvinyl alcohol; polyethylene vinyl alcohol; acrylic resins; cellulose based resins such as triacetyl cellulose, diacetyl cellulose, cellophane and the like; and the like. These materials may be used singly or in combinations of two or more kinds thereof in a form such as a mixture, a copolymer, a stack and the like depending upon the use purpose.

As the plastic substrate, one obtained by forming the undercoat layer as described in the glass plate on a plastic plate can also be used. In that case, the undercoat layer can also be made to act as an antireflection layer. In the case where the undercoat layer is formed on the plastic plate, the same technique as that in the foregoing inorganic substrate can be applied for the formation.

In the case where the undercoat layer is formed on the transparent plastic substrate, a hard coat layer may be formed between the both layers. By providing the hard coat layer, not only the hardness of the surface of the substrate is enhanced, but the surface of the substrate becomes smooth. Therefore, the adhesion between the transparent plastic substrate and the inorganic compound layer is enhanced; an enhancement of the scratch resistance strength can be achieved; and the generation of a crack on the inorganic compound layer to be caused due to bending of the substrate can be inhibited. By using such a substrate, the mechanical strength of the hydrophilic member can be improved. The material quality of the hard coat layer is not particularly limited so far as it has transparency, adequate strength and mechanical strength. For example, resins which are curable upon irradiation with ionizing radiations or ultraviolet rays and thermo-curable resins can be used. Above all, ultraviolet ray-curable acrylic reins, organosilicon based resins and thermo-curable polysiloxane resins are especially preferable. It is more preferable that such a resin has a refractive index equal or approximate to a refractive index of the transparent plastic substrate.

A coating method of such a hard coat layer is not particularly limited, and an arbitrary method is employable so far as it is able to achieve uniform coating. Also, when a film thickness of the hard coat layer is 3 µm or more, a sufficient strength is obtainable. However, in view of transparency, coating precision and handling, the film thickness of the hard coat layer is preferably in the range of from 5 to 7 µm. Furthermore; by mixing and dispersing an inorganic or organic particle having an average particle size of from 0.01 to 3 µm in the hard coat layer, it is possible to apply a light diffusing treatment which is generally called an antiglare treatment. Such a particle is not particularly limited so far as it is transparent. However, a low-refractive index material is preferable, and silicon oxide and magnesium fluoride are especially preferable in view of stability, heat resistance and the like. The light diffusing treatment can also be achieved by providing irregularities on the surface of the hard coat layer.

In this way, by using a glass plate or a plastic plate each having an undercoat layer as a substrate and forming the hydrophilic surface, the hydrophilic member of the invention can be obtained. In view of the fact that the hydrophilic member has a hydrophilic film which is excellent in hydrophilicity and durability on the surface thereof, either one or both of excellent antifouling properties, especially antifouling properties against oil and fat stains and anti-fogging properties can be imparted on the surface of the support (substrate).

The antireflection layer which can be applied on the surface of the hydrophilic member of the invention is not limited to the foregoing inorganic compound layer. For example, by stacking plural thin layers having a different reflectance or refractive index from each other, a known antireflection layer capable of obtaining an antireflection effect or the like can be properly used, and any of inorganic compounds or organic compounds can be used for a material thereof. In particular, the substrate in which an inorganic compound layer is formed as an antireflection film on the surface thereof can be formed into the antifouling and/or anti-fogging member of the invention which is excellent in an antifouling and/or antifogging function of the surface and further in antireflection properties by applying a hydrophilic polymer chain according to the invention on the surface on the side where the antireflection film is formed. Also, by sticking a functional optical member such as a polarizing plate and the like to a member having the foregoing configuration by means of a sticking technology represented by lamination, it is also possible to obtain an antireflection/optical functional member having various functions or characteristics through the use of the hydrophilic member of the invention.

By sticking such an antireflection member or antireflection/optical functional member to a glass plate, a plastic plate or a polarizing plate of a front plate of a display device of display of every sort (for example, liquid crystal displays, CRT displays, projection displays, plasma displays, EL displayers, etc.) or the like, it becomes possible to apply this antireflection member to a display device.

Also, the hydrophilic member of the invention can be applied to various uses in which an antifouling and/or anti-fogging effect is required, in addition to the foregoing display device. In the case where the antifouling and/or anti-fogging member is applied to a substrate which does not require transparency, in addition to the foregoing transparent substrate, for example, all of metals, ceramics, woods, stones, cements, concretes, fibers, textiles, combinations thereof and stacks thereof can be suitably utilized.

When an example of the field to which the hydrophilic member of the invention is applicable is referred to, examples of applications in which a substrate through which visible light is able to transmit can be applied include mirrors such as a vehicle rearview mirror, a bath mirror, a toilet mirror, a dental mirror and a road mirror; lenses such as a spectacle lens, an optical mirror, a camera lens, an endoscopic lens, an illumination lens, a semiconductor lens and a copier lens; a prism; windowpanes of a building or a watchtower; windowpanes of a vehicle such as an automobile, a railway vehicle, an aircraft, a ship, a submersible, a snowmobile, a motor cycle, a gondola of ropeway, a gondola of amusement park and a spacecraft; windshields of a vehicle such as an automobile, a railway vehicle, an aircraft, a ship, a submersible, a snowmobile, a gondola of ropeway, a gondola of amusement park and a spacecraft; goggles, sport goggles, a shield of protective mask, a shield of sport mask, a shield of helmet and a glass of frozen food display case; cover glasses of a measuring instrument; films for sticking on the surfaces of the foregoing articles; and the like.

Examples of other applicable applications include building materials, building exteriors, building interiors, window frames, windowpanes, structural members, vehicle exteriors and paintings, exteriors of machine apparatus and articles, dustproof covers and paintings, traffic signs, various display apparatus, advertizing pillars, road noise-blocking walls, railway noise-blocking walls, bridges, exteriors and paintings of pedestrian barrier, tunnel interiors and paintings, insulators, solar cell covers, solar collector covers of solar water heater, vinyl plastic hothouses, covers of vehicle lighting, housing equipment, toilets, bathtubs, washstands, illuminators, lighting covers, kitchen utensils, tableware, dishwashers, dish driers, sinks, cocking ranges, kitchen hoods, ventilation fans, indoor units of air conditioner, outdoor units of air conditioner, heat exchanger and films for sticking on the surfaces of the foregoing articles; housings, parts, exteriors and paintings of household electronic product, housings, parts, exteriors and paintings of OA instrument products and films for sticking on the surfaces of the foregoing articles; and the like. An application range thereof is broad.

Among the foregoing applications, the hydrophilic member according to the invention is preferably applied to a fin material and preferably applied to an aluminum-made fin material. That is, it is preferable that the hydrophilic composition according to the invention is coated on a fin material (preferably an aluminum-made fin material), thereby forming a hydrophilic layer on the surface of the fin material.
In an aluminum-made fin material which is used for heat exchanger such as a room air conditioner, an automobile air conditioner and the like, condensed water generated at the time of air cooling becomes a waterdrop and remains between the fins, whereby a bridge of water is generated, resulting in a reduction of the air-cooling capability. Also, dust or the like adheres between the fins, similarly resulting in a reduction of the air-cooling capability. With respect to these problems, when the hydrophilic member of the invention is applied to the fin material, a fin material which is excellent in hydrophilicity and antifouling properties and durability of these properties is obtainable.
A water contact angle of the fin material according to the invention, which is obtained by exposing to palmitic acid for one hour, washing with water for 30 minutes and repeating 30-minuite drying by 5 cycles, is preferably not more than 40 degrees.

An example of aluminum which can be used for the fin material is an aluminum plate whose surface has undergone a degreasing treatment and if desired, a chemical conversion treatment. It is suitable for the surface of an aluminum fin material to undergo a chemical conversion treatment in terms of adhesiveness, corrosion resistance and so on of a coating formed by a hydrophilization treatment,. Examples of the chemical conversion treatment include a chromate treatment. Typical examples thereof include treatment methods such as an alkali salt-chromate method (for example, a B.V. method, an M.B.V. method, an E. W method, an Alrock method or a Pylumin method), a chromic acid method, a chromate method, a phosphoric acid-chromic acid method and the like; a non-water washing coating type treatment with a composition predominantly composed of chromium chromate; and the like.

As a thin plate made of aluminum, etc. which is usable for the fin material of a heat exchanger, for example, all of pure aluminum plates compliant with the JIS standards, for example, 1100, 1050, 1200, 1N30, etc.; Al-Cu alloy based plates compliant with the JIS standards, for example, 2017, 2014, etc.; Al-Mn based alloy plates compliant with the JIS standards, for example, 3003, 3004, etc.; Al-Mg based alloy plates compliant with the JIS standards, for example, 5052, 5083, etc.; Al-Mg-Si based alloy plates compliant with the JIS standards, for example, 6061, etc.; and the like may be used, Also, a shape thereof may be any of a sheet or a coil.

Also, the fin material according to the invention is preferably used for a heat exchanger. The heat exchanger using the fin material according to the invention has excellent hydrophilicity and antifouling properties and durability of these properties, and therefore, it is possible to prevent the adhesion of a waterdrop or dust or the like between the fins from occurring. Examples of the heat exchanger include heat exchangers which are used for a room cooler or air conditioner, an oil cooler for construction equipment, an automobile radiator, a capacitor and the like.
Also, it is preferable to use a heat exchanger using the fin material according to the invention for an air conditioner. The fin material according to the invention has excellent hydrophilicity and antifouling properties and durability of these properties, and therefore, it is possible to provide an air conditioner in which the foregoing problems such as a reduction of the air-cooling capability and the like. The air conditioner may be any of a room air conditioner, a packaged air conditioner, an automobile air conditioner or the like.
Besides, known technologies (for examples, those disclosed in JP-A-2002-106882, JP-A-2002-156135, etc.) can be employed for the heat exchange or air conditioner of the invention and are not particularly limited.

### EXAMPLES

The invention is hereunder described in detail with reference to the following Examples, but it should not be construed that the invention is limited thereto.

### [Example 1]

A float plate glass (thickness: 2 mm) which is the most general transparent plate glass was prepared; the surface of the instant plate glass was hydrophilized by a UV/O₃ treatment for 10 minutes; and thereafter, a hydrophilic layer coating solution (1) having the following composition was bar coated thereon and dried in an oven at 100°C for 10 minutes to form a hydrophilic layer having a dry coating amount of 1.0 g/m², thereby preparing a hydrophilic member. This hydrophilic member had surface free energy of 82 mN/m and had a surface with high hydrophilicity. The hydrophilic layer was found to have a visible light transmittance of 87 % (measured using a Hitachi's spectrophotometer U3000).

### <Hydrophilic layer coating solution (1)>

- Sol-gel preparation liquid (1) as described below: 500 g
- Purified water: 450 g

### <Sol-gel preparation liquid (1)>

8 g of tetramethoxysilane (manufactured by Tokyo Chemical Industry Co., Ltd.), 4 g of a specified hydrophilic polymer having a silane coupling group in a terminal thereof (Illustrative Compound (1-2)) and 5 g of a positively charged nitrogen atom-containing specified compound (Illustrative Compound 3, Log P = -2.5) were mixed in 200 g of ethyl alcohol, 10 g of acetylacetone, 10 g of tetraethyl orthotitanate and 100 g of purified water, and the mixture was stirred at room temperature for 2 hours, thereby achieve the preparation.

### <Synthesis of specified hydrophilic polymer (1-2) having a silane coupling group in a terminal thereof>

A 500-mL three-necked flask was charged with 25 g of acrylamide, 3.5 g of 3-mercaptopropyltriethoxysilane and 51.3 g of dimethylformamide, to which was then added 0.25 g of dimethyl 2,2'-azobis(2-methylpropionate) under a nitrogen gas stream at 65 °C. The mixture was kept at the same temperature for 6 hours while stirring and then cooled to room temperature. The reaction mixture was thrown into 1.5 liters of ethyl acetate, and a deposited solid was collected by filtration. The obtained solid was washed with ethyl acetate, thereby obtaining a specified hydrophilic polymer which is the foregoing Illustrative Compound (1-2). A mass after drying was found to be 21 g. This hydrophilic polymer was a polymer having a weight average molecular weight of 4,000 by means of GPC (in terms of a polyethylene oxide standard).
Hereinafter, the specified hydrophilic polymer used in the Examples was synthesized in the same technique as that described above and used for evaluation.

### <Synthesis of positively charged nitrogen atom-containing specified compound (3)>

A 500-mL eggplant type flask was charged with 10 g of trimethylamine, 33 g of 3-iodopropyltriethoxysilane and 100 g of toluene; and the mixture was stirred in a nitrogen atmosphere at 100 °C while refluxing for 3 hours and then cooled to room temperature. The reaction solution was heated at 40 °C in vacuo while stirring to remove the solvent; and the residue was washed with an ethyl acetate/hexane mixed solvent (1/1) and dried to obtain a specified compound (3) which is the foregoing Illustrative Compound (3). This compound was found to have a weight after drying of 40 g. Hereinafter, the specified compound (3) used in the Examples was synthesized in the same technique as that described above and used for evaluation.

### [Example 2]

A hydrophilic member of Example 2 was obtained in the same manner as in the foregoing Example 1, except for using a specified hydrophilic polymer having a silane coupling group in a side chain thereof (Illustrative Compound (2)) in place of the specified hydrophilic polymer having a silane coupling group in a terminal thereof (Illustrative Compound (1-2)).

### <Synthesis of specified hydrophilic polymer (2) having a silane coupling group in a side chain thereof>

A 500-mL three-necked flask was charged with 39 g of acrylamide, 65 g of acrylamide-(triethoxysilyl)propane and 150 g of 1-methoxy-2-propanol, to which was then added 2.2 g of dimethyl 2,2'-azobis(2-methylpropionate) under a nitrogen gas stream at 80°C. The mixture was kept at the same temperature for 6 hours while stirring and then cooled to room temperature. The reaction mixture was thrown into 1.5 liters of hexane, and a deposited solid was collected by filtration. The obtained solid was washed with hexane, thereby obtaining a specified hydrophilic polymer (2) which is the foregoing Illustrative Compound (2). A mass after drying was found to be 100 g. This hydrophilic polymer was a polymer having a weight average molecular weight of 50,000 by means of GPC (in terms of a polyethylene oxide standard).
Hereinafter, the specified hydrophilic polymer (2) used in the Examples was synthesized in the same technique as that described above and used for evaluation.

### [Example 3]

A hydrophilic member of Example 3 was obtained in the same manner as in the foregoing Example 1, except for using a positively charged nitrogen atom-containing specified compound (Illustrative Compound 2, Log P = -4.4) in place of the positively charged nitrogen atom-containing specified compound (3).

### <Synthesis of positively charged nitrogen atom-containing specified compound (2)>

A 500-mL eggplant type flask was charged with 10 g of triethylamine, 18 g of 3-iodo-1-propanol and 100 g of toluene; and the mixture was stirred in a nitrogen atmosphere at 100 °C while refluxing for 3 hours and then cooled to room temperature. The reaction solution was heated at 40°C in vacuo while stirring to remove the solvent; and the residue was washed with an ethyl acetate/hexane mixed solvent (1/1) and dried to obtain a specified compound (2) which is the foregoing Illustrative Compound (2). This compound was found to have a weight after drying of 40 g. Hereinafter, the specified compound (2) used in the Examples was synthesized in the same technique as that described above and used for evaluation.

### [Example 4]

A hydrophilic member of Example 4 was obtained in the same manner as in the foregoing Example 2, except for using a positively charged nitrogen atom-containing specified compound (Illustrative Compound 2, Log P = -4.4) in place of the positively charged nitrogen atom-containing specified compound (3).

### [Example 5]

A hydrophilic member of Example 5 was obtained in the same manner as in the foregoing Example 1, except for using a hydrophilic layer coating solution (2) in place of the hydrophilic layer coating solution (1), carrying out drying in an oven at 150°C for 30 minutes and regulating the coating amount after drying at 30.0 g/m².

### <Hydrophilic layer coating solution (2)>

- Sol-gel preparation liquid (2) as described below: 500 g
- Purified water: 450 g

### <Sol-gel preparation liquid (2)>

12 g of a specified hydrophilic polymer having a silane coupling group in a terminal thereof (Illustrative Compound (1-2)) and 5 g of a positively charged nitrogen atom-containing specified compound (Illustrative Compound 3, Log P = -2.2) were mixed in 200 g of ethyl alcohol, 10 g of acetylacetone, 10 g of tetraethyl orthotitanate and 100 g of purified water, and the mixture was stirred at room temperature for 2 hours, thereby achieve the preparation.

### [Example 6]

A hydrophilic member of Example 6 was obtained in the same manner as in the foregoing Example 5, except for using a specified hydrophilic polymer having a silane coupling group in a side chain thereof (Illustrative Compound (2)) in place of the specified hydrophilic polymer having a silane coupling group in a terminal thereof (Illustrative Compound (1-2)).

### [Example 7]

A hydrophilic member of Example 7 was obtained in the same manner as in the foregoing Example 5, except for using a positively charged nitrogen atom-containing specified compound (Illustrative Compound 2, Log P = -4.4) in place of the positively charged nitrogen atom-containing specified compound (3).

### [Example 8]

A hydrophilic member of Example 8 was obtained in the same manner as in the foregoing Example 6, except for using a positively charged nitrogen atom-containing specified compound (Illustrative Compound 2, Log P = -4.4) in place of the positively charged nitrogen atom-containing specified compound (3).

### [Comparative Example 1]

A hydrophilic member of Comparative Example 1 was obtained in the same manner as in the foregoing Example 1, except for not adding the positively charged nitrogen atom-containing specified compound (3).

### [Comparative Example 2]

A hydrophilic member of Comparative Example 2 was obtained in the same manner as in the foregoing Example 1, except for using a compound having a structure as described below and falling outside the range of the invention (Comparative Compound (i), Log P = 0.02) in place of the positively charged nitrogen atom-containing specified compound (3).

### [Comparative Example 3]

A hydrophilic member of Comparative Example 3 was obtained in the same manner as in the foregoing Example 1, except for using a compound having a structure as described below and falling outside the range of the invention (Comparative Compound (ii), Log P = -0.11) in place of the positively charged nitrogen atom-containing specified compound (3).

### [Comparative Example 4]

A hydrophilic member of Comparative Example 4 was obtained in the same manner as in the foregoing Example 1, except for using a compound having a structure as described below and falling outside the range of the invention (Comparative Compound (iii), Log P = 2.10) in place of the positively charged nitrogen atom-containing specified compound (3).

### [Comparative Example 5]

A hydrophilic member of Comparative Example 5 was obtained in the same manner as in the foregoing Example 2, except for not adding the positively charged nitrogen atom-containing specified compound (3).

### [Comparative Example 6]

A hydrophilic member of Comparative Example 6 was obtained in the same manner as in the foregoing Example 2, except for using a compound having a structure as described below and falling outside the range of the invention (Comparative Compound (i), Log P = 0.02) in place of the positively charged nitrogen atom-containing specified compound (3).

### [Comparative Example 7]

A hydrophilic member of Comparative Example 7 was obtained in the same manner as in the foregoing Example 2, except for using a compound having a structure as described below and falling outside the range of the invention (Comparative Compound (ii), Log P = -0.11) in place of the positively charged nitrogen atom-containing specified compound (3).

### [Comparative Example 8]

A hydrophilic member of Comparative Example 8 was obtained in the same manner as in the foregoing Example 2, except for using a compound having a structure as described below and falling outside the range of the invention (Comparative Compound (iii), Log P = 2.10) in place of the positively charged nitrogen atom-containing specified compound (3).

### [Comparative Example 9]

A hydrophilic member of Comparative Example 1 was obtained in the same manner as in the foregoing Example 1, except for changing the addition amount of the positively charged nitrogen atom-containing specified compound (3) to 0.3 g.

### [Comparative Example 10]

A hydrophilic member of Comparative Example 1 was obtained in the same manner as in the foregoing Example 1, except for changing the addition amount of the positively charged nitrogen atom-containing specified compound (3) to 10 g.

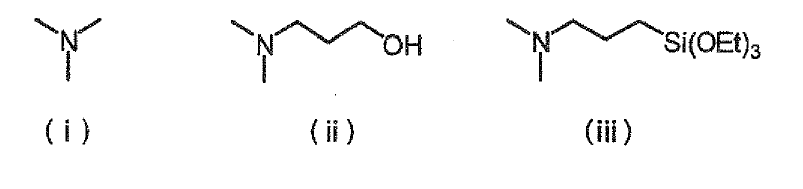

### (Evaluation)

The foregoing hydrophilic members were evaluated in the following manners.

### Surface free energy

The degree of hydrophilicity of the hydrophilic layer surface is in general measured in terms of a waterdrop contact angle (by DropMaster 500, manufactured by Kyowa Interface Science Co., Ltd.). However, with respect to a surface with very high hydrophilicity as in the invention, there is a possibility that the waterdrop contact angle is not more than 10 degrees, and even not more than 5 degrees. Thus, in mutually comparing the degree of hydrophilicity, there is a limit. On the other hand, as a method for evaluating the degree of hydrophilicity on a solid surface in detail, there is exemplified a measurement of surface free energy. There are proposed various methods. In the invention, however, the surface free energy was measured by employing the Zisman plot method as an example. Specifically, the Zisman plot method is a measurement method in which by utilizing the properties that in an aqueous solution of an inorganic electrolyte, for example, magnesium chloride, etc., its surface tension becomes large with an increase of the concentration thereof, a contact angle is measured in air under a room temperature condition by using the aqueous solution; a surface tension of the aqueous solution is taken on the abscissa, whereas a value obtained by reducing the contact angle into cos θ is taken on the ordinate; points of the aqueous solution of various concentrations are plotted to obtain a linear relationship; and the surface tension at cos θ = 1, namely at a contact angle = 0° is defined as surface free energy of the solid. The surface tension of water is 72 mN/m, and it may be said that the larger the value of surface free energy, the higher the hydrophilicity is.

### Transparency

In the case where the hydrophilic member having the hydrophilic film coated thereon according to the invention is used in a windowpane, etc., the transparency is important from the viewpoint of securing a field of view. The hydrophilic film of the invention has excellent transparency and even when it is thick, can be made compatible with durability without impairing the degree of transparency. The transparency is evaluated by measuring a light transmittance in a visible light region (from 400 nm to 800 mn) by a spectrophotometer (Hitachi's spectrophotometer U3000).

### Anti-fogging properties

A water vapor was applied on the hydrophilic member daytime in a room under a fluorescent lamp: after keeping apart from the water vapor, the hydrophilic member was disposed under an environment at 25 °C and 10 % RH; and a state of fogging and its change were organoleptically evaluated under a fluorescent lamp of the same irradiation condition as described above on a scale of three grades according to the following criteria.
A: Fogging is not observed.
B: Fogging is observed, but the surface is returned to the original state within ten seconds, whereby no fogging is observed.
C: Fogging is observed, and even after a lapse of 10 seconds, the surface is not returned to the original state.

### Ink repellency

A line was drawn with an oil based ink (oil based marker, manufactured by Mitsubishi Pencil Co., Ltd.) on the hydrophilic member; water was continuously splashed; and whether or not the ink ran down was organoleptically evaluated on a scale of three grades.
A: The ink comes off within 30 seconds.
B: The ink comes off within one minute.
C: After a lapse of one minute, the ink comes off.
D: Even by performing splashing of water exceeding 2 minutes and over 10 minutes, the ink does not come off.

### Resistance to conditioner

The hydrophilic member was dipped in a 5 % by weight conditioner aqueous solution (Shiseido's Super Mild Conditioner) for 5 minutes and then washed with running water for one minute. The member after the treatment was subjected to the foregoing evaluation of anti-fogging properties and similarly organoleptically evaluated on a scale of three grades.
A: Fogging is not observed.
B: Fogging is observed, but the surface is returned to the original state within ten seconds, whereby no fogging is observed.
C: Fogging is observed, and even after a lapse of 10 seconds, the surface is not returned to the original state.

### Adhesion

The member was stored in warm water at 60°C and tested after a lapse of 10 days and one month, respectively. The test method was carried out by a peeling test of cross cuts of 2 mm according to JIS K5400.
A: A degree of peeling of cross cuts is less than 5 %.
B: A degree of peeling of cross cuts is a degree of from 5 to 10 %.
C: A degree of peeling of cross cuts is from 10 to 50 %.
D: A degree of peeling of cross cuts is 50 % or more.

### Scratch test

A sapphire stylus having a diameter of 0.1 mm was scanned on the surface of the surface of the member by applying a load while increasing a weight of every 5 g starting from 5 g, thereby evaluating a load at which the surface of the member was injured (measured by a scratch strength tester, Type 18S, manufactured by Shinto Scientific Co., Ltd.). Even if the load is large, when the surface of the member is not injured, the durability is proven to be favorable.

### Weather resistance

The hydrophilic member was exposed in a sunshine carbon arc-type accelerated weather resistance tester for 500 hours and evaluated with respect to hydrophilicity, anti-fogging properties, antifouling properties, visible light transmittance, adhesion and scratch strength according to the foregoing methods. The evaluation was determine according to the following criteria.
A: Performance is equal to that before the exposure in all of the items.
B: One item is inferior to that before the exposure.
C: Two or more items are inferior to those before the exposure.

### Water resistance

The hydrophilic member having a size of 120 cm² was subjected to a rubbing treatment with sponge in 10 reciprocations in water while applying a load of 1 kg, and a rate of residual film was measured from a change of weight before and after the rubbing treatment. The water resistance was expressed in terms of this rate of residual film.

### Antibacterial properties

The antibacterial properties were confirmed on two kinds of strains of *Escherichia coli* (IFO 3301) and *Staphylococcus aureaus* (IFO 12732). Also, the evaluation test was carried out by a film contact method. The test method is shown below.
(1) Each of the test strains is cultured on a nutrient agar medium at 37°C for 20 hours and suspended in a 1/500 nutrient agar medium solution, thereby adjusting it so as to have a cell concentration of 2.0 × 10⁵ cells/mL.
(2) A specimen having a surface area of 25 cm² is cut out from each of the hydrophilic members.
(3) The specimens are placed in respective sterilized petri dishes, 0.5 mL of the cell test suspension prepared in (1) is added, and each of the dishes is covered by a film. On that occasion, a care is taken such that the cell test suspension does not adhere to the inner surface of the film.
(4) Each of the petri dishes having the specimen placed therein is kept at 35 °C for 24 hours.
(5) After storing for 24 hours, the test cell suspension is washed away with a sterilized buffered physiological saline, and the number of viable cells in the washing is counted by the standard plate count method. If the number of viable cells is zero, the antibacterial properties are proven to be favorable.

The results of the foregoing evaluations are shown in Tables 1 and 2. In all of the Examples, all of the anti-fogging properties, ink repellency, resistance to conditioner, adhesion, weather resistance, water resistance and antibacterial properties were favorable. In the scratch test, in all of the Examples, the surface was not injured until the load reached 55 g, and excellent durability was revealed. In the antibacterial test, the number of viable cells was zero, and the propagation of cells was not observed at all. Also, even in the antibacterial test of the hydrophilic member after testing the water resistance, the number of viable cells was zero, and a favorable antibacterial action was revealed. On the contrary, in all of the Comparative Examples, the resistance to conditioner was problematic, and in the antibacterial test, viable cells were observed. In comparison between the Examples and the Comparative Examples, it is evident that the invention is able to impart antifouling properties and antibacterial properties to the hydrophilic members of the conventional technologies.

**Table 1**

| Example | Surface energy | Anti-fogging properties | Ink repellency | Resistance to conditioner | Visible light transmittance | Adhesion | | Scratch strength | Weather resistance | Water resistance | Antibacterial properties |
|---|---|---|---|---|---|---|---|---|---|---|---|
| | | | | | | 10 days | One month | | | | |
| Example 1 | 80 mN/m | A | A | A | 82% | A | A | 65 g | A | 99 | No viable cell |
| Example 2 | 84 mN/m | A | A | A | 86% | A | A | 65 g | A | 97 | no viable cell |
| Example 3 | 86 mN/m | A | A | A | 84% | A | A | 55 g | A | 95 | No viable cell |
| Example 4 | 81mN/m | A | A | A | 85% | A | A | 60 g | A | 99 | No viable cell |
| Example 5 | 88 mN/m | A | A | A | 84% | A | A | 55 g | A | 97 | No viable cell |
| Example 6 | 90 mN/m | A | A | A | 85 % | A | A | 65 g | A | 97 | No viable cell |
| Example 7 | 86 mN/m | A | A | A | 89% | A | A | 55 g | A | 99 | No viable cell |
| Example 8 | 83 mN/m | A | A | A | 88% | A | A | 55 g | A | 97 | No viable cell |

**Table 2**

| Example | Surface energy | Anti-fogging properties | Ink repellency | Resistance to conditioner | Visible light transmittance | Adhesion | | Scratch strength | Weather resistance | Water resistance | Antibacterial properties |
|---|---|---|---|---|---|---|---|---|---|---|---|
| | | | | | | 10 days | One month | | | | |
| Comparative Example 1 | 82 mN/m | A | A | C | 82 % | A | A | 70 g | A | 100 | Viable cells |
| Comparative Example 2 | 64 mN/m | B | B | C | 80% | B | C | 25 g | A | 95 | Viable cells |
| Comparative Example 3 | 56 mN/m | A | A | C | 81% | B | B | 50 g | A | 91 | Viable cells |
| Comparative Example 4 | 56 mN/m | C | D | C | 83% | B | B | 45 g | A | 90 | Viable cells |
| Comparative Example 5 | 57 mN/m | A | A | C | 82 % | A | A | 65 g | A | 99 | Viable cells |
| Comparative Example 6 | 53 mN/m | B | B | C | 83% | B | C | 30 g | A | 92 | Viable cells |
| Comparative Example 7 | 59 mN/m | A | A | C | 83% | B | C | 50 g | A | 90 | Viable cells |
| Comparative Example 8 | 62 mN/m | C | D | C | 81% | B | B | 55 g | A | 93 | Viable cells |
| Comparative Example 9 | 88 mN/m | A | A | C | 84% | A | A | 65 g | A | 97 | Viable cells |
| Comparative Example 10 | 61 mN/m | A | B | C | 70% | B | C | 50 g | A | 80 | Viable cells |

### [Example 9]

An aluminum plate (A1200, thickness: 0.1 mm) which had been dipped in an alkaline washing solution (SemiClean A, manufactured by Yokohama Oils & Fats Industry Co., Ltd., 5 % aqueous solution) for 10 minutes and washed with water three times was prepared, and a first layer coating solution (1) having the following composition was bar coated thereon and dried in an oven at 100 °C for 10 minutes to form a first layer having a dry coating amount of 0.1 g/m². After thoroughly cooling at room temperature, a hydrophilic layer coating solution (3) was bar coated as a second layer on the coated surface of the first layer and dried in an oven at 150°C for 30 minutes to form a second layer having a dry coating amount of 0.5 g/m². There was thus prepared a hydrophilic member, which was then evaluated.

### <First layer coating solution (1)>

- Sol-gel preparation liquid (3) as described below: 500 g
- 5 % by mass aqueous solution of anionic surfactant as described below: 30 g
- Purified water: 450 g

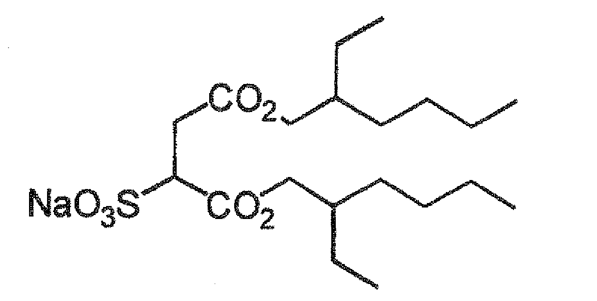

### Anionic surfactant

### < Sol-gel preparation liquid (3)>

4 g of tetramethoxysilane (manufactured by Tokyo Chemical Industry Co., Ltd.) and 4 g of methyltrimethoxysilane (manufactured by Tokyo Chemical Industry Co., Ltd.) were mixed in 200 g of ethyl alcohol, 10 g of acetylacetone, 10 g of tetraethyl orthotitanate and 100 g of purified water, and the mixture was stirred at room temperature for 2 hours, thereby achieve the preparation.

### <Hydrophilic layer coating solution (3)>

- Sol-gel preparation liquid (4) as described below: 500 g
- 5 % by mass aqueous solution of anionic surfactant as described below: 5.0 g

### <Sol-gel preparation liquid (4)>

22.5 g of a specified hydrophilic polymer having a silane coupling group in a side chain thereof (Illustrative Compound (2)), 7.5 g of a specified hydrophilic polymer having a silane coupling group in a terminal thereof (Illustrative Compound (1-1)) and 2 g of a positively charged nitrogen atom-containing specified compound (Illustrative Compound 3, Log P =-2.2) were mixed in 200 g of ethyl alcohol, 0.25 g of acetylacetone, 0.3 g of tetraethyl orthotitanate and 300 g of purified water, and the mixture was stirred at room temperature for 2 hours, thereby achieve the preparation.

### (Evaluation)

The foregoing hydrophilic member was subjected to the following evaluation. The results are shown in Table 4.

### Antifouling properties (resistance to palmitic acid)

0.2 g of palmitic acid was taken in a 50-mL glass vessel, which was then covered by an aluminum substrate having a hydrophilic film coated thereon such that the side of the hydrophilic film was exposed to palmitic acid; after exposing at 105 °C for one hour, the resulting aluminum substrate was washed with running water for 30 minutes and then subjected to drying at 80 °C for 30 minutes in one cycle; and after repeating the drying by 5 cycles, a contact angle was measured. The smaller the value of the contact angle, the more excellent the antifouling properties are.

### [Comparative Example 11]

A hydrophilic member was prepared in the same manner as in Example 9, except for changing the specified hydrophilic polymer having a silane coupling group in a terminal thereof (Illustrative Compound (1-1)) in the hydrophilic layer coating solution (3) to polyacrylamide, and then evaluated.

### [Examples 10 to 13]

Hydrophilic members were prepared in the same manner as in Example 9, except for changing the mass ratio of the specified hydrophilic polymer having a silane coupling group in a side chain thereof to the specified hydrophilic polymer having a silane coupling group in a terminal thereof and the kind of the positively charged nitrogen atom-containing specified compound in the hydrophilic layer coating solution (3) to those shown in Table 3, and then evaluated.

**Table 3**

| | Mass ratio of side chain Si type polymer/terminal Si type polymer | Positively charged nitrogen atom-containing specified compound | Log P value |
|---|---|---|---|
| Example 10 | 90/10 | 3 | -2.2 |
| Example 11 | 60/40 | 3 | -2.2 |
| Example 12 | 75/25 | 2 | -4.4 |
| Example 13 | 60/40 | 2 | -4.4 |

**Table 4**

| Example | Surface free energy | Adhesion | | Water resistance | Antifouling properties (resistance to palmitic acid) (contact angle) | Resistance to conditioner | Antibacterial properties |
|---|---|---|---|---|---|---|---|
| | | 10 days | One month | | | | |
| Example 9 | 81 mN/m | A | A | 98 | 25° | A | No viable cell |
| Example 10 | 80 mN/m | A | A | 99 | 28° | A | No viable cell |
| Example 11 | 82 mN/m | A | A | 97 | 20° | A | No viable cell |
| Example 12 | 81 mN/m | A | A | 98 | 26° | A | No viable cell |
| Example 13 | 80 mN/m | A | A | 97 | 25° | A | No viable cell |
| Comparative Example 11 | 80 mN/m | D | D | 45 | 65° | C (Film peeled) | No viable cell |

### [Examples 14 to 20]

Hydrophilic members were prepared in the same manner as in Example 6, except for changing the kinds of the specified hydrophilic polymer having a silane coupling group in a side chain thereof and the positively charged nitrogen atom-containing specified compound to those shown in Table 5, and then evaluated. The evaluation results are shown in Table 7.

**Table 5**

| | Specified hydrophilic polymer having a silane coupling group in a side chain thereof | Positively charged specified compound | |
|---|---|---|---|
| | | Illustrative Compound | Log P value |
| Example 14 | (51) | 31 | -3.8 |
| Example 15 | (51) | 33 | -1.8 |
| Examples 16 | (51) | 32 | 1.0 |
| Example 17 | (51) | 29 | 1.9 |
| Example 18 | (52) | 31 | -3.8 |
| Example 19 | (9) | 31 | -3.8 |
| Example 20 | (15) | 31 | -3.8 |

### [Examples 21 to 30]

Hydrophilic members were prepared in the same manner as in Example 9, except for changing the kinds of the specified hydrophilic polymer having a silane coupling group in a side chain thereof, the specified hydrophilic polymer having a silane coupling group in a terminal thereof and the positively charged nitrogen atom-containing specified compound to those shown in Table 6, and then evaluated. The evaluation results are shown in Table 8.

**Table 6**

| | Side chain Si type polymer | Terminal Si type polymer | Positively charged specified compound | |
|---|---|---|---|---|
| | | | Illustrative Compound | Log P value |
| Example 21 | (51) | 1-1 | 31 | -3.8 |
| Examples 22 | (51) | 1-1 | 33 | -1.8 |
| Example 23 | (51) | 1-1 | 32 | 1.0 |
| Examples 24 | (51) | 1-1 | 29 | 1.9 |
| Example 25 | (52) | 1-19 | 20 | -4.4 |
| Examples 26 | (53) | 1-43 | 26 | -3.2 |
| Example 27 | (9) | 1-37 | 9 | -2.2 |
| Example 28 | (18) | 1-47 | 12 | 0.4 |
| Example 29 | (20) | 1-8 | 17 | 0.7 |
| Example 30 | (32) | 1-45 | 18 | 1.0 |

**Table 7**

| Example | Surface energy | Anti-fogging properties | Ink repellency | Resistance to conditioner | Visible light transmittance | Adhesion | | Scratch strength | Weather resistance | Water resistance | Antibacterial properties |
|---|---|---|---|---|---|---|---|---|---|---|---|
| | | | | | | 10 days | One month | | | | |
| Example | 85 mN/m | A | A | A | 87 % | A | A | 65 g | A | 96 | No viable cell |
| Example 15 | 82 mN/m | A | A | A | 86 % | A | A | 65 g | A | 97 | No viable cell |
| Example 16 | 80 mN/m | A | A | A | 88 % | A | A | 60 g | A | 98 | No viable cell |
| Example 17 | 78 mN/m | A | A | A | 87 % | A | A | 60 g | A | 99 | No viable cell |
| Example 18 | 83 mN/m | A | A | A | 88 % | A | A | 65 g | A | 98 | no viable cell |
| Example 19 | 86 mN/m | A | A | A | 87 % | A | A | 60 g | A | 96 | No viable cell |
| Example 20 | 84 mN/m | A | A | A | 88 % | A | A | 65 g | A | 98 | no viable cell |

**Table 9**

| Example | Surface free energy | Adhesion | | Water resistance | Antifouling properties (resistance to palmitic acid) (Contact angle) | Resistance to conditioner | Antibacterial properties |
|---|---|---|---|---|---|---|---|
| | | 10 days | One month | | | | |
| Example 21 | 86 mN/m | A | A | 98 | 20° | A | No viable cell |
| Example 22 | 83 mN/m | A | A | 99 | 28° | A | No viable cell |
| Example 23 | 81 mN/m | A | A | 97 | 30° | A | No viable cell |
| Example 24 | 79 mN/m | A | A | 98 | 35° | A | No viable cell |
| Example 25 | 87 mN/m | A | A | 97 | 20° | A | No viable cell |
| Example 26 | 86 mN/m | A | A | 97 | 22° | A | No viable cell |
| Example 27 | 84 mN/m | A | A | 98 | 25° | A | No viable cell |
| Example 28 | 82 mN/m | A | A | 98 | 28° | A | No viable cell |
| Example 29 | 81 mN/m | A | A | 99 | 28° | A | No viable cell |
| Example 30 | 80 mN/m | A | A | 99 | 29° | A | No viable cell |

### INDUSTRIAL APPLICABILITY

According to the invention, it is possible to provide a hydrophilic film forming composition which is used for forming on the surface of a support of every sort a hydrophilic film provided with anti-fogging properties, abrasion resistance and antibacterial properties and having more favorable antifouling properties. Also, it is possible to provide a hydrophilic member having an excellent anti-fogging, abrasion-resistant, antibacterial and antifouling surface provided with a hydrophilic film formed of the instant hydrophilic film forming composition on the surface of an appropriate support.
While the invention has been described in detail and with reference to specific embodiments thereof, it will be apparent to one skilled in the art that various changes and modifications can be made therein without departing from the spirit and scope thereof.
This application is based on a Japanese patent application, filed September 26, 2007 (Application No. 2007-250087), a Japanese patent application, filed March 25, 2008 (Application No. 2008-79323) and a Japanese patent application, filed July 31, 2008 (Application No. 2008-198959), the entire contents of which are hereby incorporated by reference.

## Claims

1. A hydrophilic film forming composition, comprising:
(A) a positively charged nitrogen atom-containing compound having a Log P of not more than 2;
(B) a hydrolyzable silyl group-containing hydrophilic polymer; and
(C) a metal complex catalyst.

2. The hydrophilic film forming composition according to claim 1,
wherein the compound (A) has a Log P of not more than 0.

3. The hydrophilic film forming composition according to claim 1 or 2,
wherein the compound (A) is a low-molecular compound having a molecular weight of not more than 1,000.

4. The hydrophilic film forming composition according to any one of claims 1 to 3,
wherein the compound (A) is a low-molecular compound having a molecular weight of from 200 to 800.

5. The hydrophilic film forming composition according to any one of claims 1 to 4,
wherein the compound (A) is selected among compounds represented by from 1 to 8 of the following general formula (1): 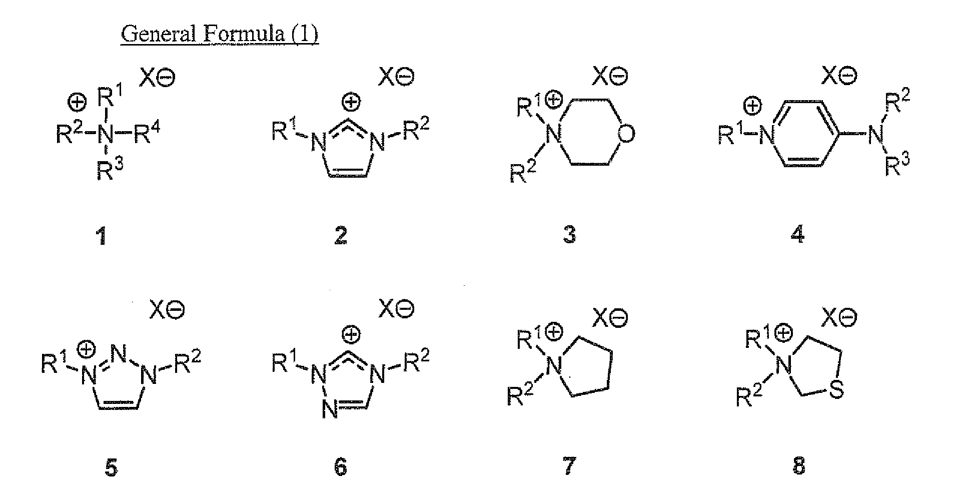 wherein each of R¹, R², R³ and R⁴ independently represents a hydrocarbon group which may be substituted with a hydroxyl group and/or a silane coupling group; and
X represents an anion.

6. The hydrophilic film forming composition according to any one of claims 1 to 5,
wherein the compound (A) is contained in an amount of from 1 to 30 % by mass relative to a nonvolatile component in the hydrophilic film forming composition.

7. The hydrophilic film forming composition according to any one of claims 1 to 6,
wherein the hydrolyzable silyl group-containing hydrophilic polymer (B) has a hydrolyzable silyl group in a polymer terminal or side chain.

8. The hydrophilic film forming composition according to any one of claims 1 to 7,
wherein the metal complex catalyst (C) is constituted of a metal element selected among the Groups 2A, 3B, 4A and 5A of the periodic table and an oxo or hydroxy compound selected among β-diketones, keto esters, hydroxycarboxylic acids or esters thereof, amino alcohols and enolic active hydrogen compounds.

9. The hydrophilic film forming composition according to any one of claims 1 to 8,
wherein the hydrolyzable silyl group-containing hydrophilic polymer (B) includes a structure represented by the following general formula (2) or general formula (3): 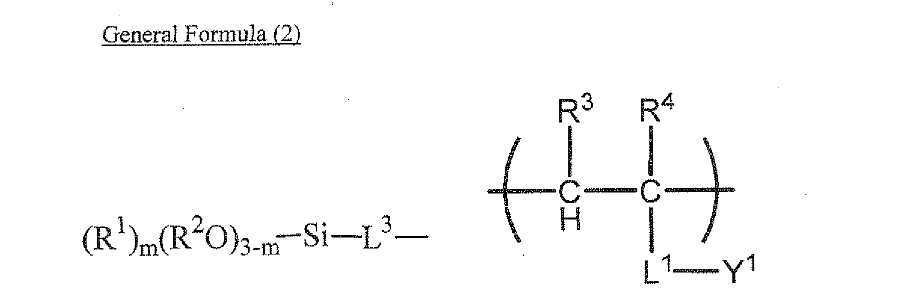 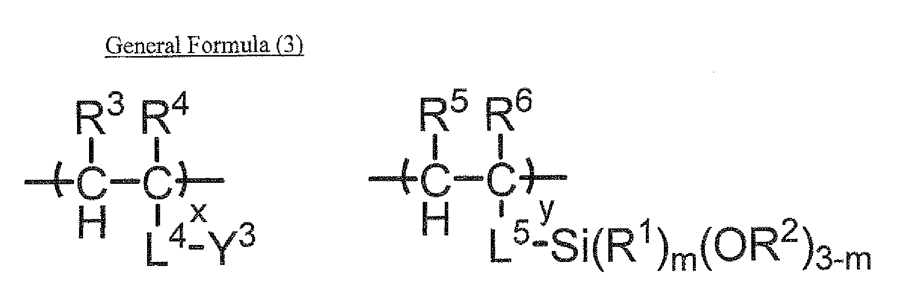 wherein each of R¹, R², R³ and R⁵ independently represents a hydrogen atom or a hydrocarbon group;
each of R⁴ and R⁶ independently represents any one of a hydrogen atom, a hydrocarbon group and a hydrocarbon group having a hydroxyl group in a terminal and/or side chain thereof;
m represents 0, 1 or 2;
each of x and y represents a composition ratio, x is satisfied with (0 < x < 100), and y is satisfied with (0 < y < 100);
each of L¹, L³ and L⁴ independently represents a single bond or an organic linking group;
L⁵ represents a single bond or a polyvalent organic linking group having one or more structures selected from the group consisting of CONH-, -NHCONH-, -OCONH-, -SO₂NH- and -SO₃-;
each of Y¹ and Y³ independently represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or-PO₃(R_{d})(Rₑ); each of Rₐ, R_{b} and R_{c} independently represents a hydrogen atom or a linear, branched or cyclic alkyl group; R_{d} represents a linear, branched or cyclic alkyl group; each of Rₑ and R_{f} independently represents a hydrogen atom, a linear, branched or cyclic alkyl group, an alkali metal, an alkaline earth metal or an onium; and R_{g} represents a linear, branched or cyclic alkyl group, a halogen atom, an inorganic anion or an organic anion.

10. The hydrophilic film forming composition according to any one of claims 1 to 9, which contains an alkoxide compound including an element selected among Si, Ti, Al and Zr.

11. The hydrophilic film forming composition according to any one of claims 3 to 10, which contains a colloidal silica.

12. A hydrophilic member, comprising:
a support having the hydrophilic film forming composition according to any one of claims 1 to 11 coated thereon.

13. The hydrophilic film forming composition according to any one of claims 1 to 12,
wherein the hydrophilic film forming composition contains a hydrophilic polymer having a hydrolyzable silyl group in a polymer terminal and a hydrophilic polymer having a hydrolyzable silyl group in a polymer side chain, with a mass ratio of the hydrophilic polymer having a hydrolyzable silyl group in a polymer terminal to the hydrophilic polymer having a hydrolyzable silyl group in a polymer side chain being in a range of from 50/50 to 5/95.

14. A hydrophilic member, comprising:
a support having the hydrophilic film forming composition according to claim 13 coated thereon.

15. A fin material having the hydrophilic film forming composition according to any one of claims 1 to 11 and 13 coated thereon.

16. An aluminum-made fin material, wherein the fin material according to claim 15 is made of aluminum.

17. A heat exchanger using the aluminum-made fin material according to claim 16.
